# EUROPEAN PATENT APPLICATION

(11) **EP 4 340 500 A1**
(43) Date of publication of application: **20.03.2024**
(21) Application number: 22806726.0
(22) Date of filing: 10.05.2022
(51) Int. Cl.: H04W 72/04

(54) **CHANNEL MONITORING METHOD AND APPARATUS, TERMINAL, AND NETWORK DEVICE**

(30) Priority: 10.05.2021 CN 202110508085
(71) Applicant: Beijing Unisoc Communications Technology Co., Ltd, Beijing 100083 (CN)
(72) Inventor: WANG, Hualei, Beijing 100083 (CN); WANG, Yuhua, Beijing 100083 (CN)
(74) Representative: Mewburn Ellis LLP
(86) International application number: PCT/CN2022/091921
(87) International publication number: WO 2022/237763

(57) **Abstract**

A method and apparatus for channel monitoring, a terminal, and a network device are provided. The method includes the following. If *M* control resource sets (CORESETs) exist in overlapping physical downlink control channel (PDCCH) monitoring occasions on an active downlink (DL) bandwidth part (BWP), and repeated PDCCHs exist in PDCCH candidates associated with the *M* CORESETs, a terminal monitors a PDCCH in the *M* CORESETs, where *M* is an integer greater than or equal to 1. Therefore, the PDCCH can be monitored in the CORESET associated with PDCCH repetitions, PDCCH reliability can be improved, and flexibility, stability, and reliability of system communication can be ensured.

## Description

### TECHNICAL FIELD

This disclosure relates to the field of communication technologies, and in particular, to a method and apparatus for channel monitoring, a terminal, and a network device.

### BACKGROUND

At present, the 3^{rd} generation partnership project (3GPP) is standardizing support for a physical downlink control channel repetition (PDCCH repetition), and the PDCCH repetition can be implemented as follows. Since one search space may be associated with multiple PDCCH candidates, a network can configure repeated PDCCHs in PDCCH candidates associated with respective search spaces so as to implement the PDCCH repetition, thereby improving PDCCH reliability.

For example, PDCCH candidates associated with one search space and PDCCH candidates associated with another search space are repeated (or same). In other words, PDCCH candidates associated with one search space have the same PDCCH content as PDCCH candidates associated with another search space, such as the same downlink control information (DCI) content carried in the PDCCH candidates.

However, since one search space is also associated with one control resource set (CORESET), the repeated PDCCHs each may be associated with a different or same CORESET. As can be seen, further study is needed regarding how a terminal monitors a PDCCH in case of PDCCH repetition.

### SUMMARY

A method and apparatus for channel monitoring, a terminal, and a network device are provided in embodiments of the disclosure, so as to implement physical downlink control channel (PDCCH) monitoring in a control resource set (CORESET) associated with PDCCH repetitions. Therefore, PDCCH reliability can be improved, and flexibility, stability, and reliability of system communication can be ensured.

In a first aspect, a method for channel monitoring is provided in embodiments of the disclosure. The method includes the following. If *M* CORESETs exist in overlapping PDCCH monitoring occasions on an active downlink (DL) bandwidth part (BWP), and repeated PDCCHs exist in PDCCH candidates associated with the M CORESETs, a terminal monitors a PDCCH in the M CORESETs, where M is an integer greater than or equal to 1.

As can be seen, in embodiments of the disclosure, if M CORESETs exist in the overlapping PDCCH monitoring occasions on the active DL BWP, and repeated PDCCHs exist in the PDCCH candidates associated with the M CORESETs, PDCCH monitoring is performed in the M CORESETs, so that the PDCCH can be monitored in a CORESET(s) associated with PDCCH repetitions. Therefore, PDCCH reliability can be improved, and flexibility, stability, and reliability of system communication can be ensured.

In a second aspect, a method for channel monitoring is provided in embodiments of the disclosure. The method includes the following. A network device configures M CORESETs in overlapping PDCCH monitoring occasions on an active DL BWP, where repeated PDCCHs exist in PDCCH candidates associated with the *M* CORESETs, and *M* is an integer greater than or equal to 1.

As can be seen, in embodiments of the disclosure, repeated PDCCHs exist in the PDCCH candidates associated with the M CORESETs that have been configured for a terminal by the network device in the overlapping PDCCH monitoring occasions on the active DL BWP. Therefore, the terminal can monitor a PDCCH in the M CORESETs, so that PDCCH monitoring in a CORESET associated with PDCCH repetitions can be implemented, thereby improving PDCCH reliability, and ensuring flexibility, stability, and reliability of system communication.

In a third aspect, an apparatus for channel monitoring is provided in embodiments of the disclosure. The apparatus includes a processing unit. The processing unit is configured to monitor a PDCCH in *M* CORESETs if the *M* CORESETs exist in overlapping PDCCH monitoring occasions on an active DL BWP and repeated PDCCHs exist in PDCCH candidates associated with the *M* CORESETs, where *M* is an integer greater than or equal to 1.

In a fourth aspect, an apparatus for channel monitoring is provided in embodiments of the disclosure. The apparatus includes a processing unit. The processing unit is configured to configure M CORESETs in overlapping PDCCH monitoring occasions on an active DL BWP, where repeated PDCCHs exist in PDCCH candidates associated with the *M* CORESETs, and *M* is an integer greater than or equal to 1.

In a fifth aspect, a terminal is provided in embodiments of the disclosure. The terminal includes a processor, a memory, a communication interface, and one or more programs, where the one or more programs are stored in the memory and configured to be executed by the processor, and the one or more programs include instructions for executing operations in the first aspect of embodiments of the disclosure.

In a sixth aspect, a network device is provided in embodiments of the disclosure. The network device includes a processor, a memory, a communication interface, and one or more programs, where the one or more programs are stored in the memory and configured to be executed by the processor, and the one or more programs include instructions for executing operations in the second aspect of embodiments of the disclosure.

In a seventh aspect, a computer-readable storage medium is provided in embodiments of the disclosure. The computer-readable storage medium is configured to store a computer program for electronic data interchange (EDI), where the computer program is operable with a computer to execute part or all of operations described in the first aspect or the second aspect of embodiments of the disclosure.

In an eighth aspect, a computer program is provided in embodiments of the disclosure. The computer program is operable with a computer to execute part or all of operations described in the first aspect or the second aspect of embodiments of the disclosure. The computer program may be a software installation package.

### BRIEF DESCRIPTION OF THE DRAWINGS

In order for clarity in elaboration of technical solutions of embodiments of the disclosure, the following will give a brief introduction to the accompanying drawings used for describing the embodiments or the related art. Apparently, the accompanying drawings described below are only some embodiments of the disclosure. Based on these drawings, those of ordinary skill in the art can also obtain other drawings without creative effort.
FIG. 1 is a schematic architectural diagram of a wireless communication system provided in embodiments of the disclosure.
FIG. 2 is a schematic flowchart of a method for channel monitoring provided in embodiments of the disclosure.
FIG. 3 is a schematic flowchart of another method for channel monitoring provided in embodiments of the disclosure.
FIG. 4 is a block diagram of functional units of an apparatus for channel monitoring provided in embodiments of the disclosure.
FIG. 5 is a block diagram of functional units of another apparatus for channel monitoring provided in embodiments of the disclosure.
FIG. 6 is a schematic structural diagram of a terminal provided in embodiments of the disclosure.
FIG. 7 is a schematic structural diagram of a network device provided in embodiments of the disclosure.

### DETAILED DESCRIPTION

In order to enable those skilled in the art to better understand technical solutions of the disclosure, the following will describe technical solutions of embodiments of the disclosure with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompanying drawings of the disclosure are used to distinguish different objects rather than describe a particular order. In addition, the terms "include", "comprise", and "have" as well as variations thereof are intended to cover non-exclusive inclusion. For example, a procedure, a method, a software, a product, or a device that includes a series of operations or units is not limited to the operations or units listed, but may further include operations or units that are not listed or may further include other operations or units that are inherent to such a procedure, a method, a product, or a device.

The "embodiment" or "implementation" referred to herein means that a particular feature, structure, or characteristic described in connection with the embodiment or implementation may be included in at least one embodiment of the disclosure. The phrase appearing in various places in the specification does necessarily refer to the same embodiment, nor does it refer to independent or alternative embodiments that are mutually exclusive to other embodiments. It will be explicitly and implicitly understood by those skilled in the art that the embodiments described herein may be combined with other embodiments.

It may be noted that, the "connect" in embodiments of the disclosure refers to direct connect, or indirect connect, or other connection manners so as to achieve communication between devices, which is not limited herein. The "network" and "system" in embodiments of the disclosure express the same concept, and a communication system is a communication network.

Technical solutions of embodiments of the disclosure are applicable to various wireless communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 6^{th} generation (6G) system, or other communication systems.

It may be noted that, a conventional wireless communication system supports a limited quantity of connections and therefore is easy to implement. However, with development of communication technology, a wireless communication system can not only support the conventional wireless communication system but also support, for example, device to device (D2D) communication, machine to machine (M2M) communication, machine type communication (MTC), vehicle to vehicle (V2V) communication, vehicle to everything (V2X) communication, narrow band internet of things (NB-IoT) communication, and the like. Therefore, technical solutions of embodiments of the disclosure is also applicable to the above wireless communication systems.

Optionally, the wireless communication system in embodiments of the disclosure is applicable to a beamforming, a carrier aggregation (CA), a dual connectivity (DC), a standalone (SA) deployment scenario, or the like.

Optionally, the wireless communication system in embodiments of the disclosure is applicable to an unlicensed spectrum, and the unlicensed spectrum may be regarded as a shared spectrum. Alternatively, the wireless communication system in embodiments of the disclosure is applicable to a licensed spectrum, and the licensed spectrum may be regarded as a non-shared spectrum.

Since various embodiments are described in connection with a terminal and a network device in embodiments of the disclosure, the terminal and the network device involved will be described in detail below.

Specifically, the terminal may be a user equipment (UE), a remote UE, a relay UE, an access terminal, a subscriber unit, a subscriber station, a mobile station, a remote station, a mobile device, a user terminal, a smart terminal, a wireless communication device, a user agent, or a user device. It may be noted that, the relay UE is a terminal that can provide relay-forward service for other terminals (including the remote UE). In addition, the terminal may also be a cellular radio telephone, a cordless telephone, a session initiation protocol (SIP) telephone, a wireless local loop (WLL) station, a personal digital assistant (PDA), a device with wireless communication functions such as a handheld device, a computing device, or other processing devices coupled with a wireless modem, an in-vehicle device, a wearable device, and a terminal in a next-generation communication system (for example, an NR communication system), or a terminal in a future evolved public land mobile network (PLMN), or the like, which is not limited herein.

Further, the terminal can be deployed on land, which includes indoor or outdoor, handheld, wearable, or in-vehicle. The terminal can be deployed on water (such as ships, and the like). The terminal can also be deployed in the air (such as airplanes, balloons, satellites, and the like).

Further, the terminal may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, or the like.

Further, the terminal may include an apparatus with wireless transceiver functions, for example, a system-on-a-chip (SOC). The SOC may include a chip, and may also include other discrete devices.

Specifically, the network device may be a device configured to communicate with a terminal, and the network device is responsible for radio resource management (RRM), quality of service (QoS) management, data compression and encryption, data transceiving, and the like at an NR side. The network device may be a base station (BS) in a communication system or a device deployed in a radio access network (RAN) to provide wireless communication functions. For example, the network device may be a base transceiver station (BTS) in a GSM or a CDMA communication system, a node B (NB) in a WCDMA communication system, an evolutional node B (eNB or eNodeB) in an LTE communication system, and a next generation evolved node B (ng-eNB) in an NR communication system, a next generation node B (gNB) in an NR communication system, a master node (MN) in a DC architecture, a second node or secondary node (SN) in the DC architecture, and the like, which is not limited herein.

Further, the network device may also be other devices in a core network (CN), for example, access and mobility management function (AMF), user plan function (UPF) or the like. The network device may also be an access point (AP) in a WLAN, a relay station, a communication device in a future evolved PLMN, a communication device in an NTN, or the like.

Further, the network device may include an apparatus that can provide wireless communication functions for the terminal, for example, an SOC. Exemplarily, the SOC may include a chip, and may also include other discrete devices.

Further, the network device can communicate with an internet protocol (IP) network, for example, an internet, a private IP network, or other data networks.

It may be noted that, in some network deployments, the network device may be an independent node for implementing all above functions of the base station. The network device may include a centralized unit (CU) and a distributed unit (DU), such as a gNB-CU and a gNB-DU, and may also include an active antenna unit (AAU). The CU may implement part of functions of the network device, and the DU may implement part of functions of the network device. For example, the CU is responsible for processing non-real-time protocols and services, to implement functions of a radio resource control (RRC) layer, a service data adaptation protocol (SDAP) layer, and a packet data convergence protocol (PDCP) layer. The DU is responsible for processing physical-layer protocols and real-time services, to implement functions of a radio link control (RLC) layer, a medium access control (MAC) layer, and a physical (PHY) layer. In addition, the AAU can implement part of processing functions of the PHY layer and related functions of radio-frequency (RF) processing and active antennas. Since information of the RRC layer may be eventually converted into information of the PHY layer or be obtained from the information of the PHY layer, in this network deployment, higher-layer signaling (such as RRC-layer signaling) can be considered to be sent by the DU or by the DU and the AAU. It can be understood that, the network device may include at least one of the CU, the DU, or the AAU. Furthermore, the CU may be classified as a network device in the RAN, and may also be classified as a network device in the CN, which is not limited herein.

Further, the network device can have a mobility. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, and the like. Alternatively, the network device may also be a base station deployed on land, on water, or on other locations.

Further, the network device can provide a service for a cell, and a terminal in the cell can communicate with the network device on a transmission resource (for example, a spectrum resource). The cell may include a macro cell, a small cell, a metro cell, a micro cell, a pico cell, a femto cell, or the like.

Based on the above description, the following will give an exemplary illustration of a wireless communication system in embodiments of the disclosure.

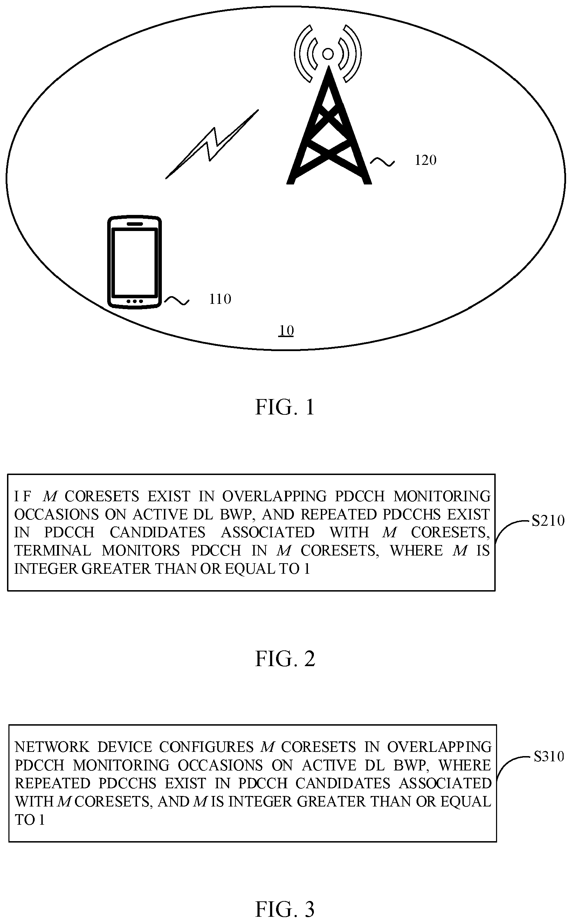

Exemplarily, FIG. 1 illustrates a wireless communication system in embodiments of the disclosure. The wireless communication system 10 may include a terminal 110 and a network device 120. The network device 120 may be a device that can communicate with the terminal 110. In addition, the network device 120 can provide communication coverage for a specific geographical area and communicate with the terminal 110 in the coverage area.

Optionally, the wireless communication system 10 may further include multiple network devices, and may include a certain number (quantity) of terminals in the coverage area of each network device, which is not limited herein.

Optionally, the wireless communication system 10 may further include a network controller, a mobility management entity, and other network entities, which is not limited herein.

Optionally, in the wireless communication system 10, communication between the network device and the terminal may be wireless communication or wire communication, which is not limited herein.

Before a method for channel monitoring provided in embodiments of the disclosure is described in detail, the following will give an introduction to related contents involved in embodiments of the disclosure.
1. Bandwidth part (BWP) and overlapping physical downlink control channel (PDCCH) monitoring occasions

The BWP is a subset of a total cell bandwidth, and thus a bandwidth for reception and transmission by a terminal need not be as large as the total cell bandwidth. A downlink (DL) BWP may have at least one control resource set (CORESET) associated with a search space.

The overlapping PDCCH monitoring occasions can be understood as PDCCH monitoring occasions being overlapped.

2. Aggregation level and control channel element (CCE)

The CCE is a resource element for a PDCCH, and one CCE includes nine resource element groups (REGs). The CCE is a logical resource unit and corresponds to nine REGs on a physical resource block (PRB).

One PDCCH may consist of *n* consecutive CCEs, where *n* is referred to as the aggregation level, and there are four aggregation levels: {1, 2, 4, 8}. If the aggregation level for the PDCCH is 8, one PDCCH consists of eight consecutive CCEs.

3. Search space and CORESET

In a 5^{th} generation (5G) NR system, due to a relatively wide bandwidth of the system and different demodulation capabilities of terminals, the PDCCH may no longer occupy the entire frequency band in the frequency domain so as to improve resource utilization and reduce complexity of blind detection. In addition, in order to increase system flexibility and adapt to different scenarios, a starting position of the PDCCH in a time domain can also be configured. Therefore, in general, in the 5G NR system, information such as the frequency band occupied by the PDCCH in the frequency domain and the number of orthogonal frequency division multiplexing (OFDM) symbols occupied by the PDCCH in the time domain are encapsulated into the CORESET, and information such as a start OFDM symbol occupied by the PDCCH, a PDCCH monitoring period, and a CORESET associated with the PDCCH are encapsulated into the search space.

The search space type may be common search space (CSS) or UE-specific search space (USS).

It may be noted that, one search space may be associated with one CORESET, for example, being indicated or configured by the higher-layer parameter *controlResourceSetId*, and one search space may also be associated with multiple PDCCH candidates, for example, being indicated or configured by the higher-layer parameter *nrofCandidates*. Therefore, an association between one CORESET and multiple PDCCH candidates can be established via the search space.

In addition, in a certain overlapping PDCCH monitoring occasion, at least one transmission configuration indication (TCI) state can be configured for a CORESET associated with PDCCH candidates, and a higher layer can configure a quasi co-location (QCL) via the TCI state, where the TCI state may be associated with QCL-typeD. Therefore, a TCI state of the CORESET associated with PDCCH candidates may be associated with QCL-typeD.

### 4. QCL

In order to ensure correct reception and demodulation of a signal, the concept of a reference signal having a QCL relationship is introduced into a standard protocol, for example, a channel state information reference signal (CSI-RS) and a synchronization signal block (SSB), so that the terminal can estimate a large-scale feature parameter according to the CSI-RS. The large-scale feature parameter includes at least one of: delay spread, Doppler spread, Doppler shift, average gain, average delay, spatial-domain information, or the like. For example, in LTE communication system release 11, an antenna port QCL is introduced into the standard protocol. The antenna port QCL may mean that signals transmitted on antenna ports can experience the same large-scale fading and thus have the same large-scale feature parameter. For example, when antenna port A and antenna port B are in the QCL relationship, the large-scale feature parameter obtained by estimating the signal on antenna port A is also applicable to the signal on antenna port B.

In addition, in the 5G NR system, the terminal and the network device may be configured with a large-scale array of multiple antenna panels, and beams formed under different antenna panels may have different large-scale features. In this case, in addition to the above delay spread, Doppler spread, Doppler shift, average gain, and average delay, the large-scale feature parameter may further include angle of arrival (AOA) reception, angle of arrival spread (AAS), angle of departure (AOD) transmission, angle of departure spread (ADS), spatial correlation, and the like.

### 5. Antenna port QCL

The terminal can be configured with up to *M* TCI states in the higher-layer parameter *PDSCH*-*Config* to decode a physical downlink shared channel (PDSCH) according to downlink control information (DCI) in a detected PDCCH, where the value of M depends on the UE capability. Each TCI state contains parameters for configuring a QCL relationship between one or two DL reference signals (for example, CSI-RSs and/or SSBs) and a demodulation reference signal (DMRS) port of the PDSCH, a DMRS port of the PDCCH, or a CSI-RS port of a CSI-RS resource. The QCL relationship can be configured by the higher-layer parameter *qcl-Type1* for a first DL reference signal and the higher-layer parameter *qcl-Type2* for a second DL reference signal (if the second DL reference signal is configured). For the case of two DL reference signals, QCL types associated with the two DL reference signals shall not be the same, regardless of whether the two DL reference signals are the same reference signal. A QCL type associated with each DL reference signal is given by the higher-layer parameter *qcl-Type* in *QCL-Info*, and may include but not limited to the following.
QCL-typeA: {Doppler shift, Doppler spread, average delay, delay spread}
QCL-typeB: {Doppler shift, Doppler spread}
QCL-typeC: {Doppler shift, average delay}
QCL-typeD: {spatial reception parameter}

The spatial reception parameter may include at least one of: AOA, average AOA, AAS, AOD, average AOD, ADS, spatial correlation of reception antennas, spatial correlation of transmission antennas, a transmission beam, a reception beam, a resource identifier (ID), or the like. In addition, when the QCL type is QCL-typeD, the TCI state can indicate a beam. In this case, each TCI state may give (contain) one or two QCL-type parameters. If the TCI state contains two QCL-type parameters, the QCL type may include QCL-typeD. In other words, the TCI state may be associated with QCL-typeD.

In addition, the TCI state may be activated by an activation command (for example, an MAC control element (CE)) issued at a network side and indicated by a TCI field in DCI. For example, when the TCI state indicates a QCL type for the PDSCH, the network device can first activate 2^{N} TCI states via the MAC CE, and then indicate one TCI state from the 2^{N} activated TCI states via A-bit TCI field in the DCI. When *N* = 3, if the value of the TCI field in the DCI is '000', a TCI indicates a first TCI state activated via the MAC CE. Furthermore, with respect to the QCL-type parameter(s) given by the TCI state, the reference signal(s) in the TCI state is quasi co-located with the DMRS port(s) of the PDSCH.

### 6. Same QCL-typeD property

How to determine whether to have the same QCL-typeD property: for the purpose of determining a CORESET, one SSB is considered to have a different QCL-typeD property than a CSI-RS; for the purpose of determining the CORESET, a first CSI-RS associated with one SSB in a first cell and a second CSI-RS associated with the SSB in a second cell have the same QCL-typeD property; and the like.

For example, if a reference signal of QCL-typeD corresponding to a TCI state of CORESET#1 is a first CSI-RS, and a reference signal of QCL-typeD corresponding to a TCI state of CORESET#2 is also the first CSI-RS, CORESET#1 and CORESET#2 have the same QCL-typeD property.

Based on the above description, FIG. 2 illustrates a schematic flowchart of a method for channel monitoring provided in embodiments of the disclosure. The method includes the following.

At S210, if M CORESETs exist in overlapping PDCCH monitoring occasions on an active DL BWP, and repeated PDCCHs exist in PDCCH candidates associated with the *M* CORESETs, a terminal monitors a PDCCH in the *M* CORESETs, where *M* is an integer greater than or equal to 1.

It may be noted that, a network can configure for each search space one CORESET via the higher-layer parameter (for example, *controlResourceSetId*), that is, one search space may be associated with one CORESET. In addition, the network can also configure for each search space multiple PDCCH candidates via the higher-layer parameter (for example, *nrofCandidates*), that is, one search space may also be associated with multiple PDCCH candidates. Therefore, an association between the CORESET and the PDCCH candidates can be established via the search space. In other words, one CORESET is associated with multiple PDCCH candidates.

By establishing a mapping between PDCCH candidates associated with respective search spaces, for example, one-to-one mapping, the network can configure repeated PDCCHs in the PDCCH candidates associated with respective search spaces so as to implement PDCCH repetition, thereby improving PDCCH reliability.

**Table 1**

| Search space | | | | | Number of PDCCH candidates | |
|---|---|---|---|---|---|---|
| Type | Aggregation level | | Size (CCE) | | | |
| USS | | 1 | | 6 | | 6 |
| | | 2 | | 12 | | 6 |
| | | 4 | | 8 | | 2 |
| | | 8 | | 16 | | 2 |
| CSS | | 4 | | 16 | | 4 |
| | | 8 | | 16 | | 2 |

For example, as illustrated in Table 1, when USS includes USS#1 and USS#2, USS#1 is associated with two PDCCH candidates if an aggregation level corresponding to USS#1 is 4. In addition, USS#2 is associated with two PDCCH candidates if an aggregation level corresponding to USS#2 is 4. In a case where an aggregation level is 4, a first PDCCH candidate associated with USS#1 maps to only a first PDCCH candidate associated with USS#2, and a second PDCCH candidate associated with USS#1 maps to only a second PDCCH candidate associated with USS#2. Therefore, by means of implicitly or explicitly configuring PDCCH repetitions by the network, the first PDCCH candidate associated with USS#1 and the first PDCCH candidate associated with USS#2 may be repeated (or same). In other words, the first PDCCH candidate associated with USS#1 may have the same PDCCH content (for example, DCI content) as the first PDCCH candidate associated with USS#2, that is, repeated PDCCHs exist. Similarly, the second PDCCH candidate associated with USS#1 and the second PDCCH candidate associated with USS#2 may be repeated (or same). As can be seen, PDCCH candidates associated with a CORESET associated with USS#1 and PDCCH candidates associated with a CORESET associated with USS#2 have repeated PDCCHs.

Specifically, PDCCH repetitions in embodiments of the disclosure may mean that PDCCH candidates respectively associated with at least two search spaces (or different search spaces) transmit the same PDCCH content (for example, the DCI content carried in the PDCCH candidates).

Specifically, "repeated PDCCHs exist in PDCCH candidates associated with the M CORESETs" can be understood as existence of at least two PDCCH candidates that carry the same PDCCH content among the PDCCH candidates associated with the M CORESETs.

Specifically, "repeated PDCCHs exist in PDCCH candidates associated with the *M* CORESETs" can be understood as existence of PDCCH candidates that are implicitly or explicitly configured as PDCCH repetitions among the PDCCH candidates associated with the *M* CORESETs.

That is, CORESETs associated with repeated PDCCHs may exist in different PDCCH monitoring occasions. For example, a CORESET associated with one of two repeated PDCCHs belongs to one of the M CORESETs, but a CORESET associated with the other one of the two repeated PDCCHs may not belong to one of the M CORESETs. In other words, CORESETs associated with the two repeated PDCCHs may exist in different PDCCH monitoring occasions.

Specifically, search spaces associated with PDCCH repetitions can be understood as follows. If multiple PDCCH candidates associated with a certain search space and multiple PDCCH candidates associated with certain search spaces have repeated PDCCHs, the certain search space and the certain search spaces can be collectively referred to as the search spaces associated with PDCCH repetitions.

For example, if multiple PDCCH candidates associated with CSS#1 and multiple PDCCH candidates associated with CSS#2 have repeated PDCCHs, CSS#1 and CSS#2 are collectively referred to as the search spaces associated with PDCCH repetitions.

Specifically, "a search space is associated with another search space" may mean that there is an association between respective search spaces associated with PDCCH repetitions.

For example, if multiple PDCCH candidates associated with CSS#1 and multiple PDCCH candidates associated with CSS#2 have repeated PDCCHs (or PDCCH repetitions), CSS#1 is associated with CSS#2. Similarly, if multiple PDCCH candidates associated with USS#1 and multiple PDCCH candidates associated with USS#2 have repeated PDCCHs, USS#1 is associated with USS#2.

Specifically, a CORESET associated with PDCCH repetitions can be understood as follows. If multiple PDCCH candidates associated with a certain CORESET and multiple PDCCH candidates associated with certain CORESETs have repeated PDCCHs, the certain CORESET and the certain CORESETs can be collectively referred to as the CORESET associated with PDCCH repetitions.

For example, if multiple PDCCH candidates associated with CORESET#1 and multiple PDCCH candidates associated with CORESET#2 have repeated PDCCHs, CORESET#1 and CORESET#2 are collectively referred to as the CORESET associated with PDCCH repetitions.

Specifically, "a CORESET is associated with another CORESET" may mean that there is an association between respective CORESETs associated with PDCCH repetitions. For example, if multiple PDCCH candidates associated with CORESET#1 and multiple PDCCH candidates associated with CORESET#2 have repeated PDCCHs, CORESET#1 is associated with CORESET#2.

As described above, in embodiments of the disclosure, if M CORESETs exist in the overlapping PDCCH monitoring occasions on the active DL BWP, and repeated PDCCHs exist in PDCCH candidates associated with the M CORESETs, PDCCH monitoring is performed in the M CORESETs, so that the PDCCH can be monitored in the CORESET associated with PDCCH repetitions. Therefore, PDCCH reliability can be improved, and flexibility, stability, and reliability of a communication system can be ensured.

Specifically, all of the M CORESETs have the same QCL-typeD property. Alternatively, there is a CORESET having a different QCL-typeD property among the *M* CORESETs. Alternatively, there are CORESETs having the same QCL-typeD property among the M CORESETs.

It may be noted that, in overlapping PDCCH monitoring occasions on a certain active BWP, at least one TCI state can be configured for a CORESET associated with PDCCH candidates, and a higher layer can configure a QCL via the TCI state, where the TCI state may be associated with QCL-typeD. Therefore, a TCI state of the CORESET associated with PDCCH candidates is associated with QCL-typeD. In embodiments of the disclosure, whether to have the same QCL-typeD property can be determined based on a reference signal corresponding to QCL-typeD.

In addition, the repeated PDCCHs each may be associated with a same or different CORESET, and different CORESETs have different QCL-typeD properties. Therefore, in embodiments of the disclosure, the terminal can monitor the PDCCH in CORESETs having different QCL-typeD properties, as well as in CORESETs having the same QCL-typeD property, which is beneficial to ensuring flexibility, stability, and reliability of the communication system.

As described above, if M CORESETs exist in the overlapping PDCCH monitoring occasions on the active DL BWP and repeated PDCCHs exist in PDCCH candidates associated with the *M* CORESETs, all of the *M* CORESETs have the same QCL-typeD property (that is, all of the M CORESETs have one QCL-typeD property); alternatively, there is a CORESET having a different QCL-typeD property among the *M* CORESETs (that is, the *M* CORESETs have multiple QCL-typeD properties); alternatively, there are CORESETs having the same QCL-typeD property among the M CORESETs (that is, the M CORESETs have multiple QCL-typeD properties). Therefore, the terminal may monitor the PDCCH in the M CORESETs as follows.
1. The terminal can monitor the PDCCH only in CORESETs having one QCL-typeD property, that is, "Case 1".
2. The terminal can monitor the PDCCH in CORESETs having multiple QCL-typeD properties, that is, "Case 2".

Embodiments of the disclosure below will give a detailed description of "Case 1" and "Case 2".

### Case 1:

In a possible example, the terminal monitors the PDCCH in the M CORESETs as follows. The terminal monitors the PDCCH in a first reference CORESET and/or in a CORESET having a same QCL-typeD property as the first reference CORESET, where the first reference CORESET is one CORESET among the M CORESETs.

Specifically, the first reference CORESET may be a CORESET(s) having one QCL-typeD property.

Specifically, the CORESET having the same QCL-typeD property as the first reference CORESET may include: one or more of the M CORESETs.

It may be noted that, first, since one CORESET may be associated with one TCI state, and each TCI state may be associated with QCL-typeD, embodiments of the disclosure can select a corresponding CORESET by determining whether TCI states of different CORESETs correspond to the same QCL-typeD property. Based on this, "the CORESET having the same QCL-typeD property as the first reference CORESET" can be understood as follows. In embodiments of the disclosure, take the first reference CORESET as one CORESET for reference, then determine other CORESETs by determining from the M CORESETs the CORESET having the same QCL-typeD property as the first reference CORESET according to the first reference CORESET, and finally monitor the PDCCH in the other CORESETs.

In addition, the first reference CORESET can be determined from the *M* CORESETs based on a certain rule. Furthermore, for "Case 1", it can be understood that the terminal can monitor the PDCCH only in the CORESETs having one QCL-typeD property, where the one QCL-typeD property is a QCL-typeD property of the first reference CORESET.

Finally, the terminal can monitor the PDCCH according to the following three principles. Monitor the PDCCH in the first reference CORESET. Monitor the PDCCH in the first reference CORESET and the CORESET having the same QCL-typeD property as the first reference CORESET. Monitor the PDCCH in the CORESET having the same QCL-typeD property as the first reference CORESET.

The following will give an example for illustration.

Example 1: in overlapping PDCCH monitoring occasions on a certain active DL BWP exist CORESETs (for the case of *M* = 4) below: CORESET#0 (associated with one TCI state), CORESET#1 (associated with one TCI state), CORESET#2 (associated with one TCI state), and CORESET#3 (associated with one TCI state). Multiple PDCCH candidates associated with CORESET#1 and multiple PDCCH candidates associated with CORESET#2 have repeated PDCCHs, that is, CORESET#1 is associated with CORESET#2. A QCL-typeD property corresponding to a TCI state of CORESET#1 is the same as a QCL-typeD property corresponding to a TCI state of CORESET#0. The QCL-typeD property corresponding to the TCI state of CORESET#1 is the same as a QCL-typeD property corresponding to a TCI state of CORESET#3. A QCL-typeD property corresponding to a TCI state of CORESET#2 is different from the QCL-typeD property corresponding to the TCI state of CORESET#0.

When the first reference CORESET is determined as "CORESET#1" based on the certain rule, the terminal monitors the PDCCH in "CORESET#0", "CORESET#1", and "CORESET#3" since the QCL-typeD property corresponding to the TCI state of CORESET#1 is the same as the QCL-typeD property corresponding to the TCI state of CORESET#0 and as the QCL-typeD property corresponding to the TCI state of CORESET#3, and the QCL-typeD property corresponding to the TCI state of CORESET#1 is different from the QCL-typeD property corresponding to the TCI state of CORESET#2.

Based on the above description, embodiments of the disclosure below will give a detailed description of a rule for determining the first reference CORESET from the M CORESETs.

### Rule 1-1:

In a possible example, if a CORESET associated with a CSS exists in a first CORESET in the overlapping PDCCH monitoring occasions on the active DL BWP, the first reference CORESET is: a CORESET that belongs to a cell with a lowest index among a cell to which the CORESET associated with a CSS in the first CORESET belongs, and belongs to the first CORESET and is associated with a CSS with a lowest index. The first CORESET includes: a CORESET associated with PDCCH repetitions among the M CORESETs.

It may be noted that, first, since one search space may be associated with one CORESET, and the search space type may be CSS and USS, each CORESET may be associated with (or contain) CSS and/or USS.

In addition, in the overlapping PDCCH monitoring occasions on the active DL BWP, each of the M CORESETs may be associated with (or belong to) one cell and each cell has a corresponding index, that is, cell index. Therefore, embodiments of the disclosure can select a cell with the lowest index from cells according to a lowest-index principle. Similarly, each search space (CSS or USS) also has a corresponding index, and thus, embodiments of the disclosure can also select a CORESET associated with a search space with the lowest index from CORESETs associated with search spaces according to the lowest-index principle.

For example, four CORESETs exist in overlapping PDCCH monitoring occasions on a certain active DL BWP, and cells associated with the four CORESETs include cell 1 and cell 2. Cell 1 is associated with CORESET#1_1 (associated with one TCI state and CSS#1) and CORESET#1_2 (associated with one TCI state and CSS#2). Cell 2 is associated with CORESET#2_1 (associated with one TCI state and USS#1) and CORESET#2_2 (associated with one TCI state and CSS#3). In this case, cell 1 has a lower index than cell 2, and CSS#1 has a lower index than CSS#2.

Furthermore, since a CORESET associated with PDCCH repetitions may exist among the M CORESETs in the overlapping PDCCH monitoring occasions on the active DL BWP, embodiments of the disclosure determine the CORESET(s) associated with PDCCH repetitions among the M CORESETs as the first CORESET. That is, each CORESET in the first CORESET is associated with repeated PDCCHs.

For example, in "Example 1", four CORESETs exist in the overlapping PDCCH monitoring occasions on the certain active DL BWP, and CORESET#1 is associated with CORESET#2. Therefore, the first CORESET includes CORESET#1 and CORESET#2.

For another example, in "Example 1", four CORESETs exist in the overlapping PDCCH monitoring occasions on the certain active DL BWP, and CORESET#1 is associated with repeated PDCCHs. Therefore, the first CORESET includes CORESET#1.

Finally, the CORESET associated with a CSS may exist or may not exist in the first CORESET. Therefore, if the CORESET associated with a CSS exists in the first CORESET, the first reference CORESET can be determined as the CORESET that belongs to the cell with the lowest index among the cell to which the CORESET associated with a CSS in the first CORESET belongs, and belongs to the first CORESET and is associated with a CSS with the lowest index. That is, first, at least one CORESET is determined by determining the CORESET associated with a CSS from the first CORESET. Then, at least one cell is determined by determining the cell to which the at least one CORESET each belongs. Next, the cell with the lowest index is determined from the at least one cell. Finally, the first reference CORESET is determined by determining from the cell with the lowest index the CORESET that belongs to the first CORESET and is associated with the CSS with the lowest index.

As can be seen, based on "Rule 1-1" described in this example, embodiments of the disclosure can accurately and quickly determine, in the overlapping PDCCH monitoring occasions on the active DL BWP, one CORESET associated with PDCCH repetitions, associated with the cell with the lowest index, and associated with the CSS with the lowest index (that is, the first reference CORESET). Therefore, the PDCCH can be monitored in the CORESET associated with PDCCH repetitions, and flexibility, stability, and reliability of system communication can be ensured.

### Rule 1-2:

In a possible example, if a CORESET associated with a CSS is absent in a first CORESET in the overlapping PDCCH monitoring occasions on the active DL BWP, the first reference CORESET is: a CORESET that belongs to a cell with a lowest index among a cell to which a CORESET associated with a USS in the first CORESET belongs, and belongs to the first CORESET and is associated with a USS with a lowest index.

The first CORESET includes: a CORESET associated with PDCCH repetitions among the *M* CORESETs.

It may be noted that, based on the above description, similarly, USS also has a corresponding index. Therefore, embodiments of the disclosure can also determine a CORESET associated with a USS with the lowest index from multiple CORESETs associated with (containing) USSs according to the lowest-index principle.

In addition, if the CORESET associated with a CSS is absent in the first CORESET, the first reference CORESET can be determined as the CORESET that belongs to the cell with the lowest index among the cell to which the CORESET associated with a USS in the first CORESET belongs, and belongs to the first CORESET and is associated with a USS with the lowest index. That is, first, at least one CORESET is determined by determining the CORESET associated with a USS from the first CORESET. Then, at least one cell is determined by determining the cell to which the at least one CORESET each belongs. Next, the cell with the lowest index is determined from the at least one cell. Finally, the first reference CORESET is determined by determining from the cell with the lowest index the CORESET that belongs to the first CORESET and is associated with a USS with the lowest index.

As can be seen, based on "Rule 1-2" described in this example, embodiments of the disclosure can accurately and quickly determine, in the overlapping PDCCH monitoring occasions on the active DL BWP, one CORESET associated with PDCCH repetitions, associated with the cell with the lowest index, and associated with the USS with the lowest index (that is, the first reference CORESET). Therefore, the PDCCH can be monitored in the CORESET associated with PDCCH repetitions, and flexibility, stability, and reliability of system communication can be ensured.

With respect to "Rule 1-1" and "Rule 1-2", embodiments of the disclosure below will give an example for illustration.

Example 2: CORESETs (for the case *of M* = 6) below exist in overlapping PDCCH monitoring occasions on a certain active DL BWP.

Cell 1: CORESET#0 (associated with one TCI state and CSS#0), CORESET#2 (associated with one TCI state and CSS#1), CORESET#3 (with one TCI state and associated with CSS#4), and CORESET#4 (with two TCI states and associated with USS#1). Multiple PDCCH candidates associated with CSS#1 and multiple PDCCH candidates associated with CSS#4 have repeated PDCCHs, that is, CSS#1 is associated with CSS#4 (or CORESET#2 is associated with CORESET#3). A QCL-typeD property corresponding to a TCI state of CORESET#2 for cell 1 is the same as a QCL-typeD property corresponding to a TCI state of CORESET#0 for cell 1. The QCL-typeD property corresponding to the TCI state of CORESET#2 for cell 1 is different from a QCL-typeD property corresponding to a TCI state of CORESET#3 for cell 1. A QCL-typeD property corresponding to a TCI state of CORESET#4 for cell 1 is the same as the QCL-typeD property corresponding to the TCI state of CORESET#2 for cell 1.

Cell 2: CORESET#1 (with one TCI state and associated with USS#2) and CORESET#2 (with one TCI state and associated with CSS#3). A QCL-typeD property corresponding to a TCI state of CORESET#2 for cell 2 is the same as a QCL-typeD property corresponding to a TCI state of CORESET#1 for cell 2. The QCL-typeD property corresponding to the TCI state of CORESET#2 for cell 2 is the same as the QCL-typeD property corresponding to the TCI state of CORESET#2 for cell 1.

First, in the overlapping PDCCH monitoring occasions on the certain active DL BWP, cells associated with the above CORESETs (for the case *of M* = 6) include cell 1 and cell 2. CORESETs associated with cell 1 include CORESET#0, CORESET#2, CORESET#3, and CORESET#4, and CORESETs associated with cell 2 include CORESET#1 and CORESET#2. CORESET#0 for cell 1 is associated with one TCI state, and a search space associated with CORESET#0 for cell 1 include CSS#0. CSS#0 is associated with multiple PDCCH candidates. Other CORESETs can be determined in sequence.

In addition, cell 1 has a lower index than cell 2, CSS#0 has a lower index than CSS#1, and CSS#1 has a lower index than CSS#4.

Furthermore, repeated PDCCHs exist in the above CORESETs, that is, CORESET#2 for cell 1 and CORESET#3 for cell 1 (that is, the first CORESET). Since CORESET#2 for cell 1 and CORESET#3 for cell 1 each are a CORESET associated with a CSS, that is, the CORESET associated with a CSS exists in the first CORESET, the first reference CORESET can be determined as "CORESET#2" for cell 1 based on "Rule 1-1" as follows. "CORESET#2" for cell 1 and "CORESET#3" for cell 1 are determined by determining the CORESET associated with a CSS from the first CORESET. Cell 1 is determined by determining the cell to which "CORESET#2" for cell 1 and "CORESET#3" for cell 1 each belongs. "CORESET#2" for cell 1 is determined by determining from cell 1 the CORESET that belongs to the first CORESET and is associated with a CSS with the lowest index.

Next, "CORESET#0" for cell 1, "CORESET#4" for cell 2, "CORESET#1" for cell 2, and "CORESET#2" for cell 2 can be determined by determining from the above CORESETs (for the case *of M =* 6) other CORESETs having the same QCL-typeD property as the first reference CORESET.

Finally, the terminal can monitor the PDCCH in "CORESET#2" for cell 1, "CORESET#0" for cell 1, "CORESET#4" for cell 1, "CORESET#1" for cell 2, and "CORESET#2" for cell 2, thereby implementing PDCCH monitoring in the CORESET associated with PDCCH repetitions.

### Case 2:

In a possible example, the terminal monitors the PDCCH in the M CORESETs as follows. The terminal monitors the PDCCH in a second reference CORESET and/or in a CORESET having a same QCL-typeD property as the second reference CORESET, and the terminal monitors the PDCCH in a third reference CORESET and/or in a CORESET having a same QCL-typeD property as the third reference CORESET. The second reference CORESET is one CORESET among the M CORESETs, the third reference CORESET is one CORESET among the M CORESETs, and the second reference CORESET has a different QCL-typeD property from the third reference CORESET.

Specifically, the second reference CORESET may be a CORESET having one QCL-typeD property.

Specifically, the CORESET having the same QCL-typeD property as the second reference CORESET may include: one or more of the M CORESETs.

Specifically, the third reference CORESET may be a CORESET having one QCL-typeD property.

Specifically, the CORESET having the same QCL-typeD property as the third reference CORESET may include: one or more of the M CORESETs.

It may be noted that, first, for "Case 2", it can be understood that the terminal needs to monitor the PDCCH in CORESETs having multiple QCL-typeD properties. The terminal can monitor the PDCCH according to the following multiple principles. Monitor the PDCCH in the second reference CORESET and the third reference CORESET. Monitor the PDCCH in the CORESET having the same QCL-typeD property as the second reference CORESET and in a third CORESET. Monitor the PDCCH in the second reference CORESET and in the CORESET having the same QCL-typeD property as the third reference CORESET. Monitor the PDCCH in the CORESET having the same QCL-typeD property as the second reference CORESET and in the CORESET having the same QCL-typeD property as the third reference CORESET. Monitor the PDCCH in the second reference CORESET and the third reference CORESET. Monitor the PDCCH in the second reference CORESET, in the CORESET having the same QCL-typeD property as the second reference CORESET, and in the third CORESET. Monitor the PDCCH in the second reference CORESET, in the CORESET having the same QCL-typeD property as the second reference CORESET, and in the third CORESET; and the like.

In addition, "the CORESET having the same QCL-typeD property as the second reference CORESET" can be understood as follows. In embodiments of the disclosure, take the second reference CORESET as one CORESET for reference, then determine other CORESETs by determining from the M CORESETs the CORESET having the same QCL-typeD property as the second reference CORESET according to the second reference CORESET, and finally monitor the PDCCH in the other CORESETs. Similarly, "the CORESET having the same QCL-typeD property as the third reference CORESET" can be understood as follows. In embodiments of the disclosure, take the third reference CORESET as one CORESET for reference, then determine other CORESETs by determining from the M CORESETs the CORESET having the same QCL-typeD property as the third reference CORESET according to the third reference CORESET, and finally monitor the PDCCH in the other CORESETs.

Finally, the second reference CORESET can be determined from the M CORESETs based on a certain rule. Similarly, the third reference CORESET can be determined from the M CORESETs based on a certain rule.

Based on the above description, embodiments of the disclosure below will give a detailed description of a rule for determining the second reference CORESET and the third reference CORESET from the M CORESETs.

### Rule 2-1-1:

In a possible example, if a cell having a CORESET associated with a CSS exists in a first cell set in the overlapping PDCCH monitoring occasions on the active DL BWP, the second reference CORESET is: a CORESET that belongs to a cell with a lowest index among the cell having the CORESET associated with a CSS in the first cell set and is associated with a CSS with a lowest index.

The first cell set includes: cells corresponding to the M CORESETs.

It may be noted that, since each of the M CORESETs may correspond to (or be associated with) one cell in the overlapping PDCCH monitoring occasions on the active DL BWP, the first cell set in embodiments of the disclosure includes a cell corresponding to each of the *M* CORESETs.

In addition, when the cell having the CORESET associated with a CSS exists in the first cell set, the second reference CORESET is determined as the CORESET that belongs to the cell with the lowest index among the cell having the CORESET associated with a CSS in the first cell set and is associated with a CSS with the lowest index. That is, first, at least one cell having the CORESET associated with a CSS is determined from the first cell set. Then, the cell with the lowest index is determined from the at least one cell. Finally, the second reference CORESET is determined by determining from the cell with the lowest index the CORESET associated with a CSS with the lowest index.

As can be seen, different from determining "the first reference CORESET" as one CORESET associated with PDCCH repetitions, associated with the cell with the lowest index, and associated with the CSS/USS with the lowest index described above, the second reference CORESET in `Rule 2-1-1' can be determined as one CORESET associated with the cell with the lowest index and associated with the CSS with the lowest index. In this case, based on "Rule 2-1-1" described in this example, embodiments of the disclosure can accurately and quickly determine, in the overlapping PDCCH monitoring occasions on the active DL BWP, one CORESET associated with the cell with the lowest index and associated with the CSS with the lowest index (that is, the second reference CORESET). Therefore, the PDCCH can be monitored in the CORESET associated with PDCCH repetitions, and flexibility, stability, and reliability of system communication can be ensured.

### Rule 2-1-2:

In a possible example, if a cell having a CORESET associated with a CSS is absent in a first cell set in the overlapping PDCCH monitoring occasions on the active DL BWP, the second reference CORESET is: a CORESET that belongs to a cell with a lowest index among a cell having a CORESET associated with a USS in the first cell set and is associated with a USS with a lowest index.

It may be noted that, based on the above description, similarly, different from determining "the first reference CORESET" as one CORESET associated with PDCCH repetitions, associated with the cell with the lowest index, and associated with the CSS/USS with the lowest index described above, the second reference CORESET in `Rule 2-1-2' can be determined as one CORESET associated with the cell with the lowest index and associated with the USS with the lowest index.

In addition, when the cell having the CORESET associated with a CSS is absent in the first cell set, the second reference CORESET is determined as the CORESET that belongs to the cell with the lowest index among the cell having the CORESET associated with a USS in the first cell set and is associated with a USS with the lowest index. That is, first, at least one cell having the CORESET associated with a USS is determined from the first cell set. Then, the cell with the lowest index is determined from the at least one cell. Finally, the second reference CORESET is determined by determining from the cell with the lowest index the CORESET associated with a USS with the lowest index.

As can be seen, based on "Rule 2-1-2" described in this example, embodiments of the disclosure can accurately and quickly determine, in the overlapping PDCCH monitoring occasions on the active DL BWP, one CORESET associated with the cell with the lowest index and associated with the USS with the lowest index (that is, the second reference CORESET). Therefore, the PDCCH can be monitored in the CORESET associated with PDCCH repetitions, and flexibility, stability, and reliability of system communication can be ensured.

With respect to "Rule 2-1-1" and "Rule 2-1-2", embodiments of the disclosure below will give an example for illustration.

Example 3: CORESETs (for the case *of M* = 6) below exist in overlapping PDCCH monitoring occasions on a certain active DL BWP.

Cell 1: CORESET#0 (associated with one TCI state and CSS#0), CORESET#2 (associated with one TCI state and CSS#1), CORESET#3 (with one TCI state and associated with CSS#4), and CORESET#4 (with two TCI states and associated with USS#1). Multiple PDCCH candidates associated with CSS#1 and multiple PDCCH candidates associated with CSS#4 have repeated PDCCHs, that is, CSS#1 is associated with CSS#4 (or CORESET#2 is associated with CORESET#3). A QCL-typeD property corresponding to a TCI state of CORESET#2 for cell 1 is the same as a QCL-typeD property corresponding to a TCI state of CORESET#0 for cell 1. The QCL-typeD property corresponding to the TCI state of CORESET#2 for cell 1 is different from a QCL-typeD property corresponding to a TCI state of CORESET#3 for cell 1. A QCL-typeD property corresponding to a TCI state of CORESET#4 for cell 1 is the same as the QCL-typeD property corresponding to the TCI state of CORESET#2 for cell 1.

Cell 2: CORESET#1 (with one TCI state and associated with USS#2) and CORESET#2 (with one TCI state and associated with CSS#3). A QCL-typeD property corresponding to a TCI state of CORESET#2 for cell 2 is the same as a QCL-typeD property corresponding to a TCI state of CORESET#1 for cell 2. The QCL-typeD property corresponding to the TCI state of CORESET#2 for cell 2 is the same as the QCL-typeD property corresponding to the TCI state of CORESET#2 for cell 1.

First, in the overlapping PDCCH monitoring occasions on the certain active DL BWP, cells associated with the above CORESETs (for the case *of M* = 6) include cell 1 and cell 2, that is, the first cell set includes cell 1 and cell 2. CORESETs associated with cell 1 include CORESET#0, CORESET#2, CORESET#3, and CORESET#4. CORESETs associated with cell 2 include CORESET#1 and CORESET#2.

In addition, cell 1 has a lower index than cell 2, CSS#0 has a lower index than CSS#1, and CSS#1 has a lower index than CSS#4.

Furthermore, since cell 1 and cell 2 each have the CORESET associated with a CSS, the cell having the CORESET associated with a CSS exists in the first cell set. Therefore, based on "Rule 2-1-1", the second reference CORESET can be determined as "CORESET#0" for cell 1 as follows. Cell 1 and cell 2 are determined by determining from the first cell set the cell having the CORESET associated with a CSS. Cell 1 is determined by determining the cell with the lowest index from cell 1 and cell 2. "CORESET#0" for cell 1 is determined by determining from cell 1 the CORESET associated with a CSS with the lowest index.

Next, "CORESET#2" for cell 1, "CORESET#4" for cell 1, "CORESET#1" for cell 2, and "CORESET#2" for cell 2 can be determined by determining from the above CORESETs (for the case *of M* = 6) other CORESETs having the same QCL-typeD property as the second reference CORESET.

Finally, the terminal can monitor the PDCCH in "CORESET#0" for cell 1, "CORESET#2" for cell 1, "CORESET#4" for cell 1, "CORESET#1" for cell 2, and "CORESET#2" for cell 2, so that PDCCH monitoring in the CORESET associated with PDCCH repetitions can be implemented.

### Rule 2-2-1:

In a possible example, if a CORESET associated with a CSS exists in a second CORESET in the overlapping PDCCH monitoring occasions on the active DL BWP, the second reference CORESET is: a CORESET that belongs to a cell with a lowest index among a cell to which the CORESET associated with a CSS in the second CORESET belongs, and belongs to the second CORESET and is associated with a CSS with a lowest index. The second CORESET includes: a CORESET not associated with PDCCH repetitions among the M CORESETs.

It may be noted that, since the CORESET not associated with PDCCH repetitions may exist among the M CORESETs in the overlapping PDCCH monitoring occasions on the active DL BWP, embodiments of the disclosure determine the CORESET not associated with PDCCH repetitions among the M CORESETs as the second CORESET. That is, repeated PDCCHs are absent in each CORESET in the second CORESET.

For example, in "Example 1", four CORESETs exist in the overlapping PDCCH monitoring occasions on the certain active DL BWP, and CORESET#1 is associated with CORESET#2. Therefore, the second CORESET includes CORESET#0 and CORESET#3.

In addition, the CORESET associated with a CSS may exist or may not exist in the second CORESET. Therefore, if the CORESET associated with a CSS exists in the second CORESET, the second reference CORESET can be determined as the CORESET that belongs to the cell with the lowest index among a cell to which the CORESET associated with a CSS in the second CORESET belongs, and belongs to the second CORESET and is associated with a CSS with the lowest index. That is, first, at least one CORESET is determined by determining from the second CORESET the CORESET associated with a CSS. Then, at least one cell is determined by determining the cell to which the at least one CORESET each belongs. Next, the cell with the lowest index is determined from the at least one cell. Finally, the second reference CORESET is determined by determining from the cell with the lowest index the CORESET that belongs to the second CORESET and is associated with a CSS with the lowest index.

As can be seen, different from determining "the second reference CORESET" as one CORESET associated with the cell with the lowest index and associated with the CSS/USS with the lowest index described in above "Rule 2-1-1" and "Rule 2-1-2", based on "Rule 2-2-1" described in this example, embodiments of the disclosure can accurately and quickly determine, in the overlapping PDCCH monitoring occasions on the active DL BWP, one CORESET not associated with PDCCH repetitions, associated with the cell with the lowest index, and associated with the CSS with the lowest index (that is, the second reference CORESET). Therefore, the PDCCH can be monitored in the CORESET associated with PDCCH repetitions, and flexibility, stability, and reliability of system communication can be ensured.

### Rule 2-2-2:

In a possible example, if a CORESET associated with a CSS is absent in a second CORESET in the overlapping PDCCH monitoring occasions on the active DL BWP, the second reference CORESET is: a CORESET that belongs to a cell with a lowest index among a cell to which a CORESET associated with a USS in the second CORESET belongs, and belongs to the second CORESET and is associated with a USS with a lowest index.

The second CORESET includes: a CORESET not associated with PDCCH repetitions among the M CORESETs.

It may be noted that, when the CORESET associated with a CSS is absent in the second CORESET, the second reference CORESET is determined as the CORESET that belongs to the cell with the lowest index among a cell to which the CORESET associated with a USS in the second CORESET belongs, and that belongs to the second CORESET and is associated with a USS with the lowest index. That is, first, at least one CORESET is determined by determining the CORESET associated with a USS from the second CORESET. Then, at least one cell is determined by determining the cell to which the at least one CORESET each belongs. Next, the cell with the lowest index is determined from the at least one cell. Finally, the second reference CORESET is determined by determining from the cell with the lowest index the CORESET that belongs to the second CORESET and is associated with a USS with the lowest index.

As can be seen, based on "Rule 2-2-2" described in this example, embodiments of the disclosure can accurately and quickly determine, in the overlapping PDCCH monitoring occasions on the active DL BWP, one CORESET not associated with PDCCH repetitions, associated with the cell with the lowest index, and associated with the USS with the lowest index (that is, the second reference CORESET). Therefore, the PDCCH can be monitored in the CORESET associated with PDCCH repetitions, and flexibility, stability, and reliability of system communication can be ensured.

With respect to "Rule 2-2-1" and "Rule 2-2-2", embodiments of the disclosure below will give an example for illustration.

Example 4: CORESETs (for the case of *M* = 6) below exist in overlapping PDCCH monitoring occasions on a certain active DL BWP.

Cell 1: CORESET#0 (associated with one TCI state and CSS#0), CORESET#2 (associated with one TCI state and CSS#1), CORESET#3 (with one TCI state and associated with CSS#4), and CORESET#4 (with two TCI states and associated with USS#1). Multiple PDCCH candidates associated with CSS#1 and multiple PDCCH candidates associated with CSS#4 have repeated PDCCHs, that is, CSS#1 is associated with CSS#4 (or CORESET#2 is associated with CORESET#3). A QCL-typeD property corresponding to a TCI state of CORESET#2 for cell 1 is the same as a QCL-typeD property corresponding to a TCI state of CORESET#0 for cell 1. The QCL-typeD property corresponding to the TCI state of CORESET#2 for cell 1 is different from a QCL-typeD property corresponding to a TCI state of CORESET#3 for cell 1. A QCL-typeD property corresponding to a TCI state of CORESET#4 for cell 1 is the same as the QCL-typeD property corresponding to the TCI state of CORESET#2 for cell 1.

Cell 2: CORESET#1 (with one TCI state and associated with USS#2) and CORESET#2 (with one TCI state and associated with CSS#3). A QCL-typeD property corresponding to a TCI state of CORESET#2 for cell 2 is the same as a QCL-typeD property corresponding to a TCI state of CORESET#1 for cell 2. The QCL-typeD property corresponding to the TCI state of CORESET#2 for cell 2 is the same as the QCL-typeD property corresponding to the TCI state of CORESET#2 for cell 1.

First, in the overlapping PDCCH monitoring occasions on the certain active DL BWP, cells associated with the above CORESETs (for the case of *M* = 6) include cell 1 and cell 2. CORESETs associated with cell 1 include CORESET#0, CORESET#2, CORESET#3, and CORESET#4. CORESETs associated with cell 2 include CORESET#1 and CORESET#2.

In addition, cell 1 has a lower index than cell 2, CSS#0 has a lower index than CSS#1, and CSS#1 has a lower index than CSS#4.

Furthermore, repeated PDCCHs exist in the above CORESETs, that is, CORESET#2 for cell 1 and CORESET#3 for cell 1. Therefore, the CORESET (that is, the second CORESET) not associated with PDCCH repetitions among the above CORESETs (for the case of *M* = 6) includes: CORESET#0 for cell 1, CORESET#3 for cell 1, CORESET#4 for cell 1, CORESET#1 for cell 2, and CORESET#2 for cell 2. Since the CORESET associated with a CSS exist in the second CORESET, based on "Rule 2-2-1", the second reference CORESET can be determined as "CORESET#0" for cell 1.

Next, "CORESET#2" for cell 1, "CORESET#4" for cell 1, "CORESET#1" for cell 2, and "CORESET#2" for cell 2 can be determined by determining from the above CORESETs (for the case *of M =* 6) other CORESETs having the same QCL-typeD property as the second reference CORESET.

Finally, the terminal can monitor the PDCCH in "CORESET#0" for cell 1, "CORESET#2" for cell 1, "CORESET#4" for cell 1, "CORESET#1" for cell 2, and "CORESET#2" for cell 2, thereby implementing PDCCH monitoring in the CORESET associated with PDCCH repetitions.

Based on the above description, embodiments of the disclosure below will give a detailed description of a rule for determining the third reference CORESET from the *M* CORESETs.

Rule 2*-x-y*-1(*x* may be 1 or 2, and *y* may be 1 or 2):
In a possible example, if the CORESET having the same QCL-typeD property as the second reference CORESET is absent in a CORESET associated with PDCCH repetitions among the M CORESETs, and when the CORESET associated with a CSS exists in a third CORESET, the third reference CORESET is: a CORESET that belongs to a cell with a lowest index among a cell to which the CORESET associated with a CSS in the third CORESET belongs, and belongs to the third CORESET and is associated with a CSS with a lowest index. The third CORESET includes: the CORESET associated with PDCCH repetitions among the M CORESETs.

It may be noted that, since the CORESET associated with PDCCH repetitions may exist among the M CORESETs in the overlapping PDCCH monitoring occasions on the active DL BWP, embodiments of the disclosure determine the CORESET associated with PDCCH repetitions as the third CORESET. In other words, each CORESET in the third CORESET is associated with repeated PDCCHs.

In addition, the CORESET having the same QCL-typeD property as the second reference CORESET may exist or may not exist in the third CORESET. Therefore, an analysis is required regarding whether the CORESET having the same QCL-typeD property as the second reference CORESET exists in the third CORESET, so as to ensure that the second reference CORESET has a different QCL-typeD property from the third reference CORESET. Furthermore, the CORESET associated with a CSS may exist or may not exist in the third CORESET. Therefore, if the CORESET having the same QCL-typeD property as the second reference CORESET is absent in the third CORESET, and if the CORESET associated with a CSS exists in the third CORESET, the third reference CORESET can be determined as the CORESET that belongs to the cell with the lowest index among a cell to which the CORESET associated with a CSS in the third CORESET belongs, and belongs to the third CORESET and is associated with a CSS with the lowest index.

As can be seen, based on "Rule 2*-x-y-*1" described in this example, embodiments of the disclosure can accurately and quickly determine, in the overlapping PDCCH monitoring occasions on the active DL BWP, one CORESET associated with PDCCH repetitions, having a different QCL-typeD property from the second reference CORESET, associated with the cell with the lowest index, and associated with the CSS with the lowest index (that is, the third reference CORESET). Therefore, the PDCCH can be monitored in the CORESET associated with PDCCH repetitions, and flexibility, stability, and reliability of system communication can be ensured.

Rule 2-*x*-*y*-2(*x* may be 1 or 2, and may be 1 or 2):
In a possible example, if the CORESET having the same QCL-typeD property as the second reference CORESET is absent in a CORESET associated with PDCCH repetitions among the M CORESETs, and if the CORESET associated with a CSS is absent in a third CORESET, the third reference CORESET is: a CORESET that belongs to a cell with a lowest index among a cell to which a CORESET associated with a USS in the third CORESET belongs, and belongs to the third CORESET and is associated with a USS with a lowest index.

As can be seen, based on "Rule 2-*x*-*y*-2" described in this example, embodiments of the disclosure can accurately and quickly determine, in the overlapping PDCCH monitoring occasions on the active DL BWP, one CORESET associated with PDCCH repetitions, having a different QCL-typeD property from the second reference CORESET, associated with the cell with the lowest index, and associated with the USS with the lowest index (that is, the third reference CORESET). Therefore, the PDCCH can be monitored in the CORESET associated with PDCCH repetitions, and flexibility, stability, and reliability of system communication can be ensured.

Rule 2*-x-y*-3 (*x* may be 1 or 2, and y may be 1 or 2):
In a possible example, if the CORESET having the same QCL-typeD property as the second reference CORESET exists in a CORESET associated with PDCCH repetitions among the M CORESETs, and if the CORESET associated with a CSS exists in a fourth CORESET, the third reference CORESET is: a CORESET that belongs to a cell with a lowest index among a cell to which the CORESET associated with a CSS in the fourth CORESET belongs, and belongs to the fourth CORESET and is associated with a CSS with a lowest index. The fourth CORESET includes: a CORESET having a different QCL-typeD property from the second reference CORESET in a CORESET associated with the CORESET having the same QCL-typeD property as the second reference CORESET among the M CORESETs. Alternatively, the fourth CORESET includes: a CORESET having a different QCL-typeD property from the second reference CORESET in the CORESET associated with PDCCH repetitions among the *M* CORESETs.

It may be noted that, the CORESET associated with the CORESET having the same QCL-typeD property as the second reference CORESET may exist among the M CORESETs. In addition, the CORESET having the different QCL-typeD property from the second reference CORESET may exist in the CORESET associated with the CORESET having the same QCL-typeD property as the second reference CORESET among the M CORESETs.

Example 5: in overlapping PDCCH monitoring occasions on a certain active DL BWP exist CORESETs (for the case of *M* = 4) below: CORESET#0 (associated with one TCI state), CORESET#1 (associated with one TCI state), CORESET#2 (associated with one TCI state), and CORESET#3 (associated with one TCI state). Multiple PDCCH candidates associated with CORESET#1 and multiple PDCCH candidates associated with CORESET#2 have repeated PDCCHs, that is, CORESET#1 is associated with CORESET#2. A QCL-typeD property corresponding to a TCI state of CORESET#1 is the same as a QCL-typeD property corresponding to a TCI state of CORESET#0. The QCL-typeD property corresponding to the TCI state of CORESET#1 is the same as a QCL-typeD property corresponding to a TCI state of CORESET#3. The QCL-typeD property corresponding to the TCI state of CORESET#1 is different from a QCL-typeD property corresponding to a TCI state of CORESET#2.

When the second reference CORESET is determined as "CORESET#0", the CORESET having the same QCL-typeD property as the second reference CORESET among the above CORESETs (for the case *of M =* 4) includes: CORESET#1 and CORESET#3.

In addition, since CORESET#1 is associated with CORESET#2, the CORESET associated with the CORESET having the same QCL-typeD property as the second reference CORESET among the above CORESETs (for the case of *M* = 4) includes: CORESET#2. Furthermore, since CORESET#2 has a different QCL-typeD property from the second reference CORESET, the fourth CORESET includes: CORESET#2.

As can be seen, based on "Rule 2-*x-y*-3" described in this example, embodiments of the disclosure can accurately and quickly determine, in the overlapping PDCCH monitoring occasions on the active DL BWP, one CORESET associated with PDCCH repetitions, having the different QCL-typeD property from the second reference CORESET, associated with the cell with the lowest index, and associated with the CSS with the lowest index (that is, the third reference CORESET). Therefore, the PDCCH can be monitored in the CORESET associated with PDCCH repetitions, and flexibility, stability, and reliability of system communication can be ensured.

Rule 2*-x-y*-4 (*x* may be 1 or 2, and y may be 1 or 2):
In a possible example, if the CORESET having the same QCL-typeD property as the second reference CORESET exists in a CORESET associated with PDCCH repetitions among the M CORESETs, and if the CORESET associated with a CSS is absent in a fourth CORESET, the third reference CORESET is: a CORESET that belongs to a cell with a lowest index among a cell to which a CORESET associated with a USS in the fourth CORESET belongs, and belongs to the fourth CORESET and is associated with a USS with a lowest index.

The fourth CORESET includes: a CORESET having a different QCL-typeD property from the second reference CORESET in a CORESET associated with the CORESET having the same QCL-typeD property as the second reference CORESET among the M CORESETs. Alternatively, the fourth CORESET includes: a CORESET having a different QCL-typeD property from the second reference CORESET in the CORESET associated with PDCCH repetitions among the M CORESETs.

As can be seen, based on "Rule 2-*x-y*-4" described in this example, embodiments of the disclosure can accurately and quickly determine, in the overlapping PDCCH monitoring occasions on the active DL BWP, one CORESET associated with PDCCH repetitions, having the different QCL-typeD property from the second reference CORESET, associated with the cell with the lowest index, and associated with the USS with the lowest index (that is, the third reference CORESET). Therefore, the PDCCH can be monitored in the CORESET associated with PDCCH repetitions, and flexibility, stability, and reliability of system communication can be ensured.

With respect to "Rule 2-2-1" and "Rule 2-2-2", embodiments of the disclosure below will give an example for illustration.

Example 6: CORESETs (for the case of *M* = 6) below exist in overlapping PDCCH monitoring occasions on a certain active DL BWP.

Cell 1: CORESET#0 (associated with one TCI state and CSS#0), CORESET#2 (associated with one TCI state and CSS#1), CORESET#3 (with one TCI state and associated with CSS#4), and CORESET#4 (with two TCI states and associated with USS#1). Multiple PDCCH candidates associated with CSS#1 and multiple PDCCH candidates associated with CSS#4 have repeated PDCCHs, that is, CSS#1 is associated with CSS#4 (or CORESET#2 is associated with CORESET#3). A QCL-typeD property corresponding to a TCI state of CORESET#2 for cell 1 is the same as a QCL-typeD property corresponding to a TCI state of CORESET#0 for cell 1. The QCL-typeD property corresponding to the TCI state of CORESET#2 for cell 1 is different from a QCL-typeD property corresponding to a TCI state of CORESET#3 for cell 1. A QCL-typeD property corresponding to a TCI state of CORESET#4 for cell 1 is the same as the QCL-typeD property corresponding to the TCI state of CORESET#2 for cell 1.

Cell 2: CORESET#1 (with one TCI state and associated with USS#2) and CORESET#2 (with one TCI state and associated with CSS#3). A QCL-typeD property corresponding to a TCI state of CORESET#2 for cell 2 is the same as a QCL-typeD property corresponding to a TCI state of CORESET#1 for cell 2. The QCL-typeD property corresponding to the TCI state of CORESET#2 for cell 2 is the same as the QCL-typeD property corresponding to the TCI state of CORESET#3 for cell 1.

First, in the overlapping PDCCH monitoring occasions on the certain active DL BWP, cells associated with the above CORESETs (for the case of *M* = 6) include cell 1 and cell 2. CORESETs associated with cell 1 include CORESET#0, CORESET#2, CORESET#3, and CORESET#4. CORESETs associated with cell 2 include CORESET#1 and CORESET#2. Cell 1 has a lower index than cell 2, CSS#0 has a lower index than CSS#1, and CSS#1 has a lower index than CSS#4.

In addition, when the second reference CORESET is "CORESET#0" for cell 1, the CORESET having the same QCL-typeD property as the second reference CORESET among the above CORESETs (for the case *of M =* 6) includes: "CORESET#2" for cell 1, "CORESET#4" for cell 1, "CORESET#1" for cell 2, and "CORESET#2" for cell 2.

Furthermore, since "CORESET#2" for cell 1 is associated with "CORESET#3" for cell 1, as can be known from "Rule 2*-x-y-3*", the CORESET associated with the CORESET having the same QCL-typeD property as the second reference CORESET includes:
"CORESET#3" for cell 1. Since "CORESET#3" for cell 1 has the different QCL-typeD property from the second reference CORESET, the fourth CORESET includes: "CORESET#3" for cell 1. In this case, since the CORESET associated with a CSS exists in the fourth CORESET, the third reference CORESET can be determined as "CORESET#3" for cell 1.

Next, "CORESET#2" for cell 1 and "CORESET#4" for cell 1 can be determined by determining from the above CORESETs (for the case of *M* = 6) other CORESETs having the same QCL-typeD property as the second reference CORESET. Similarly, "CORESET#1" for cell 2 and "CORESET#2" for cell 2 can be determined by determining from the above CORESETs (for the case of *M* = 6) other CORESETs having the same QCL-typeD property as the third reference CORESET.

Finally, the terminal can monitor the PDCCH in "CORESET#0" for cell 1, "CORESET#2" for cell 1, "CORESET#3" for cell 1, "CORESET#4" for cell 1, "CORESET#1" for cell 2, and "CORESET#2" for cell 2, thereby implementing PDCCH monitoring in the CORESET associated with PDCCH repetitions.

Based on the above description, embodiments of the disclosure below will give a detailed description of a rule for determining the second reference CORESET and the third reference CORESET from the M CORESETs.

### Rule 2-3-1:

In a possible example, if a CORESET associated with a CSS exists in a fifth CORESET in the overlapping PDCCH monitoring occasions on the active DL BWP, the second reference CORESET is: a CORESET that belongs to a cell with a lowest index among a cell to which the CORESET associated with a CSS in the fifth CORESET belongs, and belongs to the fifth CORESET and is associated with a CSS with a lowest index. The fifth CORESET includes: a CORESET associated with PDCCH repetitions among the M CORESETs.

It may be noted that, "Rule 2-3-1" is similar to "Rule 1-1", which will not be repeated herein.

As can be seen, different from determining "the second reference CORESET" as one CORESET not associated with PDCCH repetitions, associated with the cell with the lowest index, and associated with the CSS/USS with the lowest index described above in "Rule 2-2-1" and "Rule 2-2-2", based on "Rule 2-3-1" described in this example, embodiments of the disclosure can accurately and quickly determine, in the overlapping PDCCH monitoring occasions on the active DL BWP, one CORESET associated with PDCCH repetitions, associated with the cell with the lowest index, and associated with the CSS with the lowest index (that is, the second reference CORESET). Therefore, the PDCCH can be monitored in the CORESET associated with PDCCH repetitions, and flexibility, stability, and reliability of system communication can be ensured.

### Rule 2-3-2:

In a possible example, if a CORESET associated with a CSS is absent in a fifth CORESET in the overlapping PDCCH monitoring occasions on the active DL BWP, the second reference CORESET is: a CORESET that belongs to a cell with a lowest index among a cell to which a CORESET associated with a USS in the fifth CORESET belongs, and belongs to the fifth CORESET and is associated with a USS with a lowest index.

The fifth CORESET includes: a CORESET associated with PDCCH repetitions among the M CORESETs.

It may be noted that, "Rule 2-3-2" is similar to "Rule 1-2", which will not be repeated herein.

As can be seen, based on "Rule 2-3-2" described in this example, embodiments of the disclosure can accurately and quickly determine, in the overlapping PDCCH monitoring occasions on the active DL BWP, one CORESET associated with PDCCH repetitions, associated with the cell with the lowest index, and associated with the USS with the lowest index (that is, the second reference CORESET). Therefore, the PDCCH can be monitored in the CORESET associated with PDCCH repetitions, and flexibility, stability, and reliability of system communication can be ensured.

Based on the above description, embodiments of the disclosure below will give a detailed description of a rule for determining the third reference CORESET from the *M* CORESETs.

Rule 2-3-*z*-1 (*z* may be 1 or 2):
In a possible example, if the CORESET associated with a CSS exists in a sixth CORESET, the third reference CORESET is: a CORESET that belongs to a cell with a lowest index among a cell to which the CORESET associated with a CSS in the sixth CORESET belongs, and belongs to the sixth CORESET and is associated with a CSS with a lowest index. The sixth CORESET includes: a CORESET having a different QCL-typeD property from the second reference CORESET in a CORESET associated with the CORESET having the same QCL-typeD property as the second reference CORESET among the *M* CORESETs. Alternatively, the sixth CORESET includes: a CORESET having a different QCL-typeD property from the second reference CORESET in the CORESET associated with PDCCH repetitions among the M CORESETs.

As can be seen, based on "Rule 2-3-z-1" described in this example, embodiments of the disclosure can accurately and quickly determine, in the overlapping PDCCH monitoring occasions on the active DL BWP, one CORESET associated with PDCCH repetitions, having the different QCL-typeD property from the second reference CORESET, associated with the cell with the lowest index, and associated with the CSS with the lowest index (that is, the third reference CORESET). Therefore, the PDCCH can be monitored in the CORESET associated with PDCCH repetitions, and flexibility, stability, and reliability of system communication can be ensured.

Rule 2-3-z-2 (z may be 1 or 2):
In a possible example, if the CORESET associated with a CSS is absent in a sixth CORESET in the overlapping PDCCH monitoring occasions on the active DL BWP, the third reference CORESET is: a CORESET that belongs to a cell with a lowest index among a cell to which a CORESET associated with a USS in the sixth CORESET belongs, and belongs to the sixth CORESET and is associated with a USS with a lowest index.

The sixth CORESET includes: a CORESET having a different QCL-typeD property from the second reference CORESET in a CORESET associated with the CORESET having the same QCL-typeD property as the second reference CORESET among the M CORESETs. Alternatively, the sixth CORESET includes: a CORESET having a different QCL-typeD property from the second reference CORESET in the CORESET associated with PDCCH repetitions among the M CORESETs.

As can be seen, based on "Rule 2-3-z-2" described in this example, embodiments of the disclosure can accurately and quickly determine, in the overlapping PDCCH monitoring occasions on the active DL BWP, one CORESET associated with PDCCH repetitions, having the different QCL-typeD property from the second reference CORESET, associated with the cell with the lowest index, and associated with the USS with the lowest index (that is, the third reference CORESET). Therefore, the PDCCH can be monitored in the CORESET associated with PDCCH repetitions, and flexibility, stability, and reliability of system communication can be ensured.

Consistent with the above embodiments, FIG. 3 illustrates a schematic flowchart of another method for channel monitoring provided in embodiments of the disclosure. The method includes the following.

At S310, a network device configures M CORESETs in overlapping PDCCH monitoring occasions on an active DL BWP, where repeated PDCCHs exist in PDCCH candidates associated with the M CORESETs, and M is an integer greater than or equal to 1.

Specifically, all of the M CORESETs have the same QCL-typeD property. Alternatively, there is a CORESET having a different QCL-typeD property among the *M* CORESETs. Alternatively, there are CORESETs having the same QCL-typeD property among the M CORESETs.

Specifically, the M CORESETs include a first reference CORESET and/or a CORESET having a same QCL-typeD property as the first reference CORESET, where the first reference CORESET is one CORESET among the M CORESETs. Alternatively, the M CORESETs include a second reference CORESET and/or a CORESET having a same QCL-typeD property as the second reference CORESET, and include a third reference CORESET and/or a CORESET having a same QCL-typeD property as the third reference CORESET. The second reference CORESET is one CORESET among the M CORESETs, the third reference CORESET is one CORESET among the M CORESETs, and the second reference CORESET has a different QCL-typeD property from the third reference CORESET.

It may be noted that, in embodiments of the disclosure, the description of each embodiment has its own emphasis. Therefore, for the parts not described in detail in the embodiments illustrated in FIG. 3, reference can be made to related descriptions in the embodiments illustrated in FIG. 2, which will not be repeated herein.

As can be seen, in embodiments of the disclosure, repeated PDCCHs exist in PDCCH candidates associated with the M CORESETs that have been configured by the network device for the terminal in the overlapping PDCCH monitoring occasions on the active DL BWP. Therefore, the terminal can monitor the PDCCH among the M CORESETs, thereby implementing PDCCH monitoring in the CORESET associated with PDCCH repetitions, improving PDCCH reliability, and ensuring flexibility, stability, and reliability of system communication.

As described above, the solutions of embodiments of the disclosure are mainly described from a perspective of the method. It may be understood that, in order to implement the foregoing functions, the terminal or the network device includes various hardware structures and/or software modules for implementing various functions. The person skilled in the art can be readily aware that, with reference to units and algorithm operations of various examples described in embodiments of the disclosure, the disclosure can be implemented in the form of hardware or in combination of hardware and computer software. Whether a function is implemented in the form of hardware or in the form of driving a hardware by a computer software depends on specific applications and design constraints of the technical solutions. The person skilled in the art can use different methods to implement the described functions for each specific application, but such embodiment shall not be considered as going beyond the scope of the disclosure.

Embodiments of the disclosure can divide functional units of the terminal or the network device according to the foregoing examples of methods. For example, each functional unit may be divided to correspond to each function, or two or more functions may also be integrated into one processing unit. The above integrated unit may be implemented in the form of hardware, and may also be implemented in the form of a software program module. It may be noted that, the division of units in embodiments of the disclosure is schematic and is merely a logical division of functions, and there may be other division modes in actual embodiment.

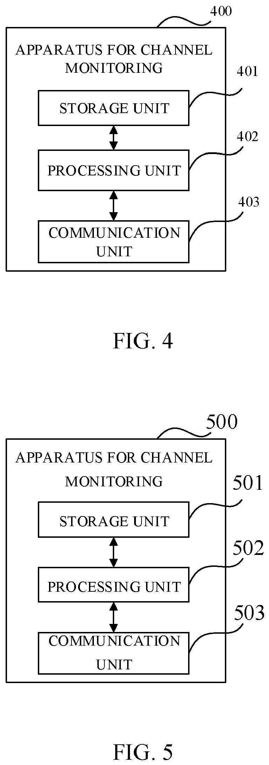

In a case where the integrated unit is applied, FIG. 4 provides a block diagram of functional units of an apparatus for channel monitoring. The apparatus 400 for channel monitoring includes: a processing unit 402 and a communication unit 403. The processing unit 402 is configured to control and manage an action of the terminal. For example, the processing unit 402 is configured to support the terminal in executing the operations illustrated in FIG. 2 and other procedures for the technical solutions described in the disclosure. The communication unit 403 is configured to support communication between the terminal and other devices in the wireless communication system. The apparatus 400 for channel monitoring may further include a storage unit 401. The storage unit 401 is configured to store program codes executed by the apparatus 400 for channel monitoring and store data transmitted by the apparatus 500 for channel monitoring.

It may be noted that, the apparatus 400 for channel monitoring may be a chip or a chip module.

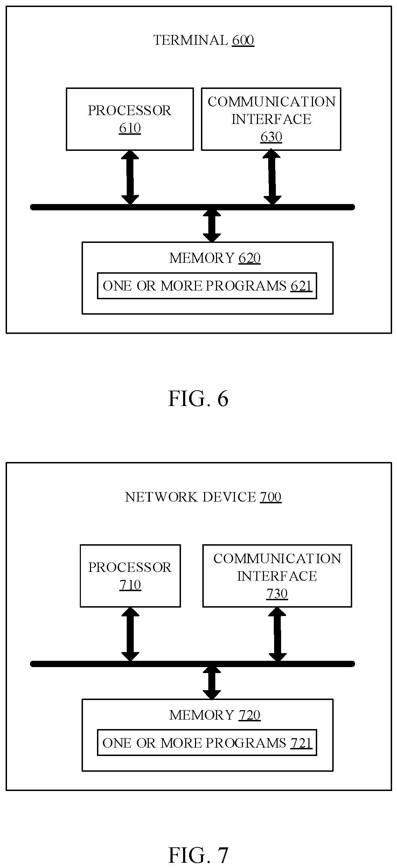

The processing unit 402 may be a processor or a controller, and may be, for example, a central processing unit (CPU), a general-purpose processor, a digital signal processor (DSP), an application-specific integrated circuit (ASIC), a field programmable gate array (FPGA) or other programmable logic devices, a transistor logic device, a hardware component, or any arbitrary combination thereof. The processing unit 402 can implement or perform various illustrative logical blocks, modules, and circuits described in connection with the disclosure. The processing unit 402 may also be a combination that implements a computing function, for example, a combination that includes one or more microprocessors, a combination of a DSP and a microprocessor, or the like. The communication unit 403 may be a communication interface, a transceiver, a transceiver circuit, or the like. The storage unit 401 may be a memory. When the processing unit 402 is a processor, the communication unit 403 is a communication interface, and the storage unit 401 is a memory, the apparatus 400 for channel monitoring involved in embodiments of the disclosure may be the terminal illustrated in FIG. 6.

In a specific embodiment, the processing unit 402 is configured to execute any operation executed by the terminal in the foregoing method embodiments, and when data transmission such as sending is executed, the communication unit 403 is optionally invoked to complete the corresponding operation. The following will give a detailed description.

The processing unit 402 is configured to monitor the PDCCH in the *M* CORESETs if the *M* CORESETs exist in the overlapping PDCCH monitoring occasions on the active DL BWP and repeated PDCCHs exist in PDCCH candidates associated with the *M* CORESETs, where *M* is an integer greater than or equal to 1.

It may be noted that, for a specific embodiment of each operation in embodiments illustrated in FIG. 4, reference can be made to descriptions in the method embodiments illustrated in FIG. 2 above, which will not be repeated herein.

As can be seen, in embodiments of the disclosure, the apparatus for channel monitoring is configured to monitor the PDCCH in the *M* CORESETs if the *M* CORESETs exist in the overlapping PDCCH monitoring occasions on the active DL BWP and repeated PDCCHs exist in the PDCCH candidates associated with the M CORESETs. Therefore, the PDCCH can be monitored in the CORESET associated with PDCCH repetitions, PDCCH reliability can be improved, and flexibility, stability, and reliability of system communication can be ensured.

In a possible example, all of the M CORESETs have a same QCL-typeD property. Alternatively, there is a CORESET having a different QCL-typeD property among the *M* CORESETs. Alternatively, there are CORESETs having a same QCL-typeD property among the M CORESETs.

In a possible example, the processing unit 402, configured to monitor the PDCCH in the M CORESETs, is specifically configured to: monitor the PDCCH in a first reference CORESET and/or in a CORESET having a same QCL-typeD property as the first reference CORESET, where the first reference CORESET is one CORESET among the M CORESETs; alternatively monitor the PDCCH in a second reference CORESET and/or in a CORESET having a same QCL-typeD property as the second reference CORESET, and monitor the PDCCH in a third reference CORESET and/or in a CORESET having a same QCL-typeD property as the third reference CORESET, where the second reference CORESET is one CORESET among the *M* CORESETs, the third reference CORESET is one CORESET among the *M* CORESETs, and the second reference CORESET has a different QCL-typeD property from the third reference CORESET.

In a possible example, if a CORESET associated with a CSS exists in a first CORESET in the overlapping PDCCH monitoring occasions on the active DL BWP, the first reference CORESET is: a CORESET that belongs to a cell with a lowest index among a cell to which the CORESET associated with a CSS in the first CORESET belongs, and belongs to the first CORESET and is associated with a CSS with a lowest index. The first CORESET includes: a CORESET associated with PDCCH repetitions among the M CORESETs.

In a possible example, if a CORESET associated with a CSS is absent in a first CORESET in the overlapping PDCCH monitoring occasions on the active DL BWP, the first reference CORESET is: a CORESET that belongs to a cell with a lowest index among a cell to which a CORESET associated with a USS in the first CORESET belongs, and belongs to the first CORESET and is associated with a USS with a lowest index.

In a possible example, if a cell having a CORESET associated with a CSS exists in a first cell set in the overlapping PDCCH monitoring occasions on the active DL BWP, the second reference CORESET is: a CORESET that belongs to a cell with a lowest index among the cell having the CORESET associated with a CSS in the first cell set and is associated with a CSS with a lowest index. The first cell set includes: cells corresponding to the M CORESETs.

In a possible example, if a cell having a CORESET associated with a CSS is absent in a first cell set in the overlapping PDCCH monitoring occasions on the active DL BWP, the second reference CORESET is: a CORESET that belongs to a cell with a lowest index among a cell having a CORESET associated with a USS in the first cell set and is associated with a USS with a lowest index.

In a possible example, if a CORESET associated with a CSS exists in a second CORESET in the overlapping PDCCH monitoring occasions on the active DL BWP, the second reference CORESET is: a CORESET that belongs to a cell with a lowest index among a cell to which the CORESET associated with a CSS in the second CORESET belongs, and belongs to the second CORESET and is associated with a CSS with a lowest index. The second CORESET includes: a CORESET not associated with PDCCH repetitions among the M CORESETs.

In a possible example, if a CORESET associated with a CSS is absent in a second CORESET in the overlapping PDCCH monitoring occasions on the active DL BWP, the second reference CORESET is: a CORESET that belongs to a cell with a lowest index among a cell to which a CORESET associated with a USS in the second CORESET belongs, and belongs to the second CORESET and is associated with a USS with a lowest index.

In a possible example, if the CORESET having the same QCL-typeD property as the second reference CORESET is absent in a CORESET associated with PDCCH repetitions among the M CORESETs, and if the CORESET associated with a CSS exists in a third CORESET, the third reference CORESET is: a CORESET that belongs to a cell with a lowest index among a cell to which the CORESET associated with a CSS in the third CORESET belongs, and belongs to the third CORESET and is associated with a CSS with a lowest index. The third CORESET includes: the CORESET associated with PDCCH repetitions among the M CORESETs.

In a possible example, if the CORESET having the same QCL-typeD property as the second reference CORESET is absent in a CORESET associated with PDCCH repetitions among the M CORESETs, and if the CORESET associated with a CSS is absent in a third CORESET, the third reference CORESET is: a CORESET that belongs to a cell with a lowest index among a cell to which a CORESET associated with a USS in the third CORESET belongs, and belongs to the third CORESET and is associated with a USS with a lowest index.

In a possible example, if the CORESET having the same QCL-typeD property as the second reference CORESET exists in a CORESET associated with PDCCH repetitions among the M CORESETs, and if the CORESET associated with a CSS exists in a fourth CORESET, the third reference CORESET is: a CORESET that belongs to a cell with a lowest index among a cell to which the CORESET associated with a CSS in the fourth CORESET belongs, and belongs to the fourth CORESET and is associated with a CSS with a lowest index. The fourth CORESET includes: a CORESET having a different QCL-typeD property from the second reference CORESET in a CORESET associated with the CORESET having the same QCL-typeD property as the second reference CORESET among the M CORESETs. Alternatively, the fourth CORESET includes: a CORESET having a different QCL-typeD property from the second reference CORESET in the CORESET associated with PDCCH repetitions among the *M* CORESETs.

In a possible example, if the CORESET having the same QCL-typeD property as the second reference CORESET exists in a CORESET associated with PDCCH repetitions among the M CORESETs, and if the CORESET associated with a CSS is absent in a fourth CORESET, the third reference CORESET is: a CORESET that belongs to a cell with a lowest index among a cell to which a CORESET associated with a USS in the fourth CORESET belongs, and belongs to the fourth CORESET and is associated with a USS with a lowest index.

In a possible example, if a CORESET associated with a CSS exists in a fifth CORESET in the overlapping PDCCH monitoring occasions on the active DL BWP, the second reference CORESET is: a CORESET that belongs to a cell with a lowest index among a cell to which the CORESET associated with a CSS in the fifth CORESET belongs, and belongs to the fifth CORESET and is associated with a CSS with a lowest index. The fifth CORESET includes: a CORESET associated with PDCCH repetitions among the M CORESETs.

In a possible example, if a CORESET associated with a CSS does not exist in a fifth CORESET in the overlapping PDCCH monitoring occasions on the active DL BWP, the second reference CORESET is: a CORESET that belongs to a cell with a lowest index among a cell to which a CORESET associated with a USS in the fifth CORESET belongs, and belongs to the fifth CORESET and is associated with a USS with a lowest index.

In a possible example, if the CORESET associated with a CSS exists in a sixth CORESET, the third reference CORESET is: a CORESET that belongs to a cell with a lowest index among a cell to which the CORESET associated with a CSS in the sixth CORESET belongs, and belongs to the sixth CORESET and is associated with a CSS with a lowest index. The sixth CORESET includes: a CORESET having a different QCL-typeD property from the second reference CORESET in a CORESET associated with the CORESET having the same QCL-typeD property as the second reference CORESET among the *M* CORESETs. Alternatively, the sixth CORESET includes: a CORESET having a different QCL-typeD property from the second reference CORESET in the CORESETs associated with PDCCH repetitions among the M CORESETs.

In a possible example, if the CORESET associated with a CSS does not exist in a sixth CORESET in the overlapping PDCCH monitoring occasions on the active DL BWP, the third reference CORESET is: a CORESET that belongs to a cell with a lowest index among a cell to which a CORESET associated with a USS in the sixth CORESET belongs, and belongs to the sixth CORESET and is associated with a USS with a lowest index.

In a case where the integrated unit is applied, FIG. 5 provides a block diagram of functional units of another apparatus for channel monitoring. The apparatus 500 for channel monitoring includes: a processing unit 502 and a communication unit 503. The processing unit 502 is configured to control and manage an action of the network device. For example, the processing unit 502 is configured to support the network device in executing the operations illustrated in FIG. 3 and other procedures for the technical solutions described in the disclosure. The communication unit 503 is configured to support communication between the network device and other devices in the wireless communication system. The apparatus 500 for channel monitoring may further include a storage unit 501. The storage unit 501 is configured to store program codes executed by the apparatus 500 for channel monitoring and store data transmitted by the apparatus 500 for channel monitoring.

It may be noted that, the apparatus 500 for channel monitoring may be a chip or a chip module.

The processing unit 502 may be a processor or a controller, and may be, for example, a CPU, a general-purpose processor, a DSP, an ASIC, an FPGA or other programmable logic devices, a transistor logic device, a hardware component, or any arbitrary combination thereof. The processing unit 502 can implement or perform various illustrative logical blocks, modules, and circuits described in connection with the disclosure. The processing unit 502 may also be a combination that implements a computing function, for example, a combination that includes one or more microprocessors, a combination of a DSP and a microprocessor, or the like. The communication unit 503 may be a communication interface, a transceiver, a transceiver circuit, or the like. The storage unit 501 may be a memory. When the processing unit 502 is a processor, the communication unit 503 is a communication interface, and the storage unit 501 is a memory, the apparatus 500 for channel monitoring involved in embodiments of the disclosure may be the network device illustrated in FIG. 7.

In a specific embodiment, the processing unit 502 is configured to execute any operation executed by the network device in the foregoing method embodiments, and when data transmission such as sending is executed, the communication unit 503 is optionally invoked to complete the corresponding operation. The following will give a detailed description.

The processing unit 502 is configured to configure M CORESETs in overlapping PDCCH monitoring occasions on an active DL BWP, where repeated PDCCHs exist in PDCCH candidates associated with the M CORESETs, and M is an integer greater than or equal to 1.

It may be noted that, for a specific embodiment of each operation in embodiments illustrated in FIG. 5, reference can be made to descriptions in the method embodiments illustrated in FIG. 2 and FIG. 3 above, which will not be repeated herein.

As can be seen, in embodiments of the disclosure, repeated PDCCHs exist in the PDCCH candidates associated with the M CORESETs that have been configured for the terminal by the apparatus for channel monitoring. Therefore, the terminal can monitor the PDCCH in the M CORESETs, so as to implement PDCCH monitoring in the CORESET associated with PDCCH repetitions, thereby improving PDCCH reliability, and ensuring flexibility, stability, and reliability of system communication.

In a possible example, all of the M CORESETs have a same QCL-typeD property. Alternatively, there is a CORESET having a different QCL-typeD property among the *M* CORESETs. Alternatively, there are CORESETs having a same QCL-typeD property among the M CORESETs.

In a possible example, the M CORESETs include a first reference CORESET and/or a CORESET having a same QCL-typeD property as the first reference CORESET, where the first reference CORESET is one CORESET among the M CORESETs. Alternatively, the M CORESETs include a second reference CORESET and/or a CORESET having a same QCL-typeD property as the second reference CORESET, and include a third reference CORESET and/or a CORESET having a same QCL-typeD property as the third reference CORESET. The second reference CORESET is one CORESET among the M CORESETs, the third reference CORESET is one CORESET among the M CORESETs, and the second reference CORESET has a different QCL-typeD property from the third reference CORESET.

In a possible example, if a CORESET associated with a CSS exists in a first CORESET in the overlapping PDCCH monitoring occasions on the active DL BWP, the first reference CORESET is: a CORESET that belongs to a cell with a lowest index among a cell to which the CORESET associated with a CSS in the first CORESET belongs, and belongs to the first CORESET and is associated with a CSS with a lowest index. The first CORESET includes: a CORESET associated with PDCCH repetitions among the M CORESETs.

In a possible example, if a CORESET associated with a CSS is absent in a first CORESET in the overlapping PDCCH monitoring occasions on the active DL BWP, the first reference CORESET is: a CORESET that belongs to a cell with a lowest index among a cell to which a CORESET associated with a USS in the first CORESET belongs, and belongs to the first CORESET and is associated with a USS with a lowest index.

In a possible example, if a cell having a CORESET associated with a CSS exists in a first cell set in the overlapping PDCCH monitoring occasions on the active DL BWP, the second reference CORESET is: a CORESET that belongs to a cell with a lowest index among the cell having the CORESET associated with a CSS in the first cell set and is associated with a CSS with a lowest index. The first cell set includes: cells corresponding to the M CORESETs.

In a possible example, if a cell having a CORESET associated with a CSS is absent in a first cell set in the overlapping PDCCH monitoring occasions on the active DL BWP, the second reference CORESET is: a CORESET that belongs to a cell with a lowest index among a cell having a CORESET associated with a USS in the first cell set and is associated with a USS with a lowest index.

In a possible example, if a CORESET associated with a CSS exists in a second CORESET in the overlapping PDCCH monitoring occasions on the active DL BWP, the second reference CORESET is: a CORESET that belongs to a cell with a lowest index among a cell to which the CORESET associated with a CSS in the second CORESET belongs, and belongs to the second CORESET and is associated with a CSS with a lowest index. The second CORESET includes: a CORESET not associated with PDCCH repetitions among the M CORESETs.

In a possible example, if a CORESET associated with a CSS is absent in a second CORESET in the overlapping PDCCH monitoring occasions on the active DL BWP, the second reference CORESET is: a CORESET that belongs to a cell with a lowest index among a cell to which a CORESET associated with a USS in the second CORESET belongs, and belongs to the second CORESET and is associated with a USS with a lowest index.

In a possible example, if the CORESET having the same QCL-typeD property as the second reference CORESET is absent in a CORESET associated with PDCCH repetitions among the M CORESETs, and if the CORESET associated with a CSS exists in a third CORESET, the third reference CORESET is: a CORESET that belongs to a cell with a lowest index among a cell to which the CORESET associated with a CSS in the third CORESET belongs, and belongs to the third CORESET and is associated with a CSS with a lowest index. The third CORESET includes: the CORESET associated with PDCCH repetitions among the M CORESETs.

In a possible example, if the CORESET having the same QCL-typeD property as the second reference CORESET is absent in a CORESET associated with PDCCH repetitions among the M CORESETs, and if the CORESET associated with a CSS is absent in a third CORESET, the third reference CORESET is: a CORESET that belongs to a cell with a lowest index among a cell to which a CORESET associated with a USS in the third CORESET belongs, and belongs to the third CORESET and is associated with a USS with a lowest index.

In a possible example, if the CORESET having the same QCL-typeD property as the second reference CORESET exists in a CORESET associated with PDCCH repetitions among the M CORESETs, and if the CORESET associated with a CSS exists in a fourth CORESET, the third reference CORESET is: a CORESET that belongs to a cell with a lowest index among a cell to which the CORESET associated with a CSS in the fourth CORESET belongs, and belongs to the fourth CORESET and is associated with a CSS with a lowest index. The fourth CORESET includes: a CORESET having a different QCL-typeD property from the second reference CORESET in a CORESET associated with the CORESET having the same QCL-typeD property as the second reference CORESET among the M CORESETs. Alternatively, the fourth CORESET includes: a CORESET having a different QCL-typeD property from the second reference CORESET in the CORESET associated with PDCCH repetitions among the *M* CORESETs.

In a possible example, if the CORESET having the same QCL-typeD property as the second reference CORESET exists in a CORESET associated with PDCCH repetitions among the *M* CORESETs, and if the CORESET associated with a CSS is absent in a fourth CORESET, the third reference CORESET is: a CORESET that belongs to a cell with a lowest index among a cell to which a CORESET associated with a USS in the fourth CORESET belongs, and belongs to the fourth CORESET and is associated with a USS with a lowest index.

In a possible example, if a CORESET associated with a CSS exists in a fifth CORESET in the overlapping PDCCH monitoring occasions on the active DL BWP, the second reference CORESET is: a CORESET that belongs to a cell with a lowest index among a cell to which the CORESET associated with a CSS in the fifth CORESET belongs, and belongs to the fifth CORESET and is associated with a CSS with a lowest index. The fifth CORESET includes: a CORESET associated with PDCCH repetitions among the M CORESETs.

In a possible example, if a CORESET associated with a CSS is absent in a fifth CORESET in the overlapping PDCCH monitoring occasions on the active DL BWP, the second reference CORESET is: a CORESET that belongs to a cell with a lowest index among a cell to which a CORESET associated with a USS in the fifth CORESET belongs, and belongs to the fifth CORESET and is associated with a USS with a lowest index.

In a possible example, if the CORESET associated with a CSS exists in a sixth CORESET in the overlapping PDCCH monitoring occasions on the active DL BWP, the third reference CORESET is: a CORESET that belongs to a cell with a lowest index among a cell to which the CORESET associated with a CSS in the sixth CORESET belongs, and belongs to the sixth CORESET and is associated with a CSS with a lowest index. The sixth CORESET includes: a CORESET having a different QCL-typeD property from the second reference CORESET in a CORESET associated with the CORESET having the same QCL-typeD property as the second reference CORESET among the M CORESETs. Alternatively, the sixth CORESET includes: a CORESET having a different QCL-typeD property from the second reference CORESET in the CORESET associated with PDCCH repetitions among the M CORESETs.

In a possible example, if the CORESET associated with a CSS is absent in a sixth CORESET in the overlapping PDCCH monitoring occasions on the active DL BWP, the third reference CORESET is: a CORESET that belongs to a cell with a lowest index among a cell to which a CORESET associated with a USS in the sixth CORESET belongs, and belongs to the sixth CORESET and is associated with a USS with a lowest index.

FIG. 6 is a schematic structural diagram of a terminal provided in embodiments of the disclosure. As illustrated in FIG. 6, the terminal 600 includes a processor 610, a memory 620, a communication interface 630, and a communication bus that is configured to connect the processor 610, the memory 620, and the communication interface 630.

The memory 620 is, including but not limited to, a random access memory (RAM), a read-only memory (ROM), an erasable programmable ROM (EPROM), or a compact disc read-only memory (CD-ROM). The memory 620 is configured to store program codes executed by the terminal 600 and data transmitted by the terminal 600.

The communication interface 630 is configured to receive and transmit data.

The processor 610 may be one or more CPUs, and in a case where the processor 610 is one CPU, the CPU may be a single-core CPU or a multi-core CPU.

The processor 610 in the terminal 600 is configured to read one or more programs 621 stored in the memory 620 and execute the following operations. The processor 610 is configured to monitor a PDCCH in M CORESETs if the M CORESETs exist in overlapping PDCCH monitoring occasions on an active DL BWP and repeated PDCCHs exist in PDCCH candidates associated with the M CORESETs, where M is an integer greater than or equal to 1.

It may be noted that, for a specific embodiment of each operation, reference can be made to related descriptions in the above method embodiments illustrated in FIG. 2, and the terminal 600 can be configured to perform the method at the terminal side in the foregoing method embodiments of the disclosure, which will not be repeated herein.

As can be seen, PDCCH monitoring can be performed in the M CORESETs if the *M* CORESETs exist in the overlapping PDCCH monitoring occasions on the active DL BWP and repeated PDCCHs exist in the PDCCH candidates associated with the M CORESETs. Therefore, the PDCCH can be monitored in the CORESET associated with PDCCH repetitions, PDCCH reliability can be improved, and flexibility, stability, and reliability of system communication can be ensured.

FIG. 7 is a schematic structural diagram of a network device provided in embodiments of the disclosure. As illustrated in FIG. 7, the network device 700 includes a processor 710, a memory 720, a communication interface 730, and a communication bus that is configured to connect the processor 710, the memory 720, and the communication interface 730.

The memory 720 is, including but not limited to, an RAM, an ROM, an EPROM, or a CD-ROM. The memory 720 is configured to store program codes executed by the network device 700 and data transmitted by the network device 700.

The communication interface 730 is configured to receive and transmit data.

The processor 710 may be one or more CPUs, and in a case where the processor 710 is one CPU, the CPU may be a single-core CPU or a multi-core CPU.

The processor 710 in the network device 700 is configured to read one or more programs 721 stored in the memory 720 and execute the following operations. The processor 710 is configured to configure M CORESETs in overlapping PDCCH monitoring occasions on an active DL BWP, where repeated PDCCHs exist in PDCCH candidates associated with the *M* CORESETs, and M is an integer greater than or equal to 1.

It may be noted that, for a specific embodiment of each operation, reference can be made to relevant descriptions in the above method embodiments illustrated in FIG. 2 and FIG. 3, and the network device 700 can be configured to perform the method at the network device side in the foregoing method embodiments of the disclosure, which will not be repeated herein.

As can be seen, repeated PDCCHs exist in the PDCCH candidates associated with the *M* CORESETs that have been configured for the terminal by the network device in the overlapping PDCCH monitoring occasions on the active DL BWP. Therefore, the terminal can monitor the PDCCH in the *M* CORESETs, so as to implement PDCCH monitoring in the CORESET associated with PDCCH repetitions, thereby improving PDCCH reliability, and ensuring flexibility, stability, and reliability of system communication.

A computer-readable storage medium is further provided in embodiments of the disclosure. The computer-readable storage medium is configured to store a computer program for electronic data interchange (EDI), where the computer program is operable with a computer to execute part or all of operations described by the terminal or the management device in the foregoing method embodiments.

A computer program product is further provided in embodiments of the disclosure. The computer program product includes a computer program. The computer program is operable with a computer to execute part or all of operations described by the terminal or the management device in the forgoing method embodiments. The computer program product may be a software installation package.

In the foregoing embodiments, the description of each embodiment has its own emphasis. For the parts not described in detail in one embodiment, reference can be made to related descriptions in other embodiments.

The methods or the algorithmic operations described in embodiments of the disclosure may be implemented in a form of hardware or in the way that a processor executes software instructions. The software instructions may be composed of corresponding software modules, and the software modules may be stored in an RAM, a flash memory, an ROM, an EPROM, an electrically EPROM (EEPROM), a register, a hard disk, a mobile hard disk, a CD-ROM, or any other form of storage medium known in the art. An illustrative storage medium is coupled to the processor, so that the processor can read information from the storage medium and write information to the storage medium. The storage medium may also be part of the processor. The processor and the storage medium may be located in an ASIC. In addition, the ASIC may be located in the terminal or the management device. The processor and the storage medium may exist in the terminal or the management device as discrete components.

The persons skilled in the art may be aware that, in the above one or more examples, all or part of the functions described in embodiments of the disclosure may be implemented via software, hardware, firmware, or any other combination thereof. When implemented by software, all or part of the functions may be implemented in a form of a computer program product. The computer program product includes one or more computer instructions. When the computer program instructions are loaded and executed on a computer, all or part of the procedures or functions described in embodiments of the disclosure are generated. The computer may be a general-purpose computer, a special-purpose computer, a computer network, or other programmable apparatuses. The computer instructions may be stored in a computer-readable storage medium or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner may be, for example, a coaxial cable, an optical fiber, a digital subscriber line (DSL), and the like. The wireless manner may be, for example, infrared, wireless, microwave, and the like. The computer-readable storage medium may be any computer accessible usable-medium or a data storage device such as a server, a data center, or the like which is integrated with one or more usable media. The usable medium may be a magnetic medium (such as a soft disc, a hard disc, or a magnetic tape), an optical medium (such as a digital video disc (DVD)), or a semiconductor medium (such as a solid state disk (SSD)), and the like.

Each module/unit in each apparatus and product described in the above embodiments may be a software module/unit, a hardware module/unit, or may be partially a software module/unit and partially a hardware module/unit. For example, for each apparatus and product applied to or integrated into the chip, each module/unit included can be implemented by hardware such as circuits, or at least part of modules/units can be implemented by software programs that run on a processor integrated into the chip, and the rest (if any) of modules/units can be implemented by hardware such as circuits. For each apparatus and product applied to or integrated into the chip module, each module/unit included can be implemented by hardware such as circuit, and different modules/units can be located in a same component (such as a chip, a circuit module, or the like) or different components of the chip module. Alternatively, at least part of modules/units can be implemented by software programs that run on the processor integrated into the chip module, and the rest (if any) of modules/units can be implemented by hardware such as circuits. For each apparatus and product applied to or integrated into the terminal, each module/unit included can be implemented by hardware such as circuits, and different modules/units can be located in a same component (such as a chip, a circuit module, or the like) or different components in the terminal, or at least part of modules/units can be implemented by software programs that run on the processor integrated into the terminal, and the rest (if any) of modules/units can be implemented by hardware such as circuits.

The foregoing specific embodiments further elaborate the purpose, technical solutions, and beneficial effects of embodiments of the disclosure. It may be understood that, the above are merely specific embodiments of the disclosure and are not intended to limit the scope of protection of embodiments of the disclosure. Any modification, equivalent arrangements, and improvements made within the technical scope of embodiments of the disclosure shall be included in the scope of protection of embodiments of the disclosure.

## Claims

1. A method for channel monitoring, comprising:
monitoring, by a terminal, a physical downlink control channel (PDCCH) in *M* control resource sets (CORESETs), in response to existence of the M CORESETs in overlapping PDCCH monitoring occasions on an active downlink (DL) bandwidth part (BWP) and existence of repeated PDCCHs in PDCCH candidates associated with the *M* CORESETs, *M* being an integer greater than or equal to 1.

2. The method of claim 1, wherein
all of the *M* CORESETs have a same quasi co-location type D (QCL-typeD) property; or
there is a CORESET having a different QCL-typeD property among the *M* CORESETs; or
there are CORESETs having a same QCL-typeD property among the *M* CORESETs.

3. The method of claim 1 or 2, wherein monitoring, by the terminal, the PDCCH in the *M* CORESETs comprises:
monitoring, by the terminal, the PDCCH in a first reference CORESET and/or in a CORESET having a same QCL-typeD property as the first reference CORESET, wherein the first reference CORESET is one CORESET among the *M* CORESETs; or
monitoring, by the terminal, the PDCCH in a second reference CORESET and/or in a CORESET having a same QCL-typeD property as the second reference CORESET, and monitoring, by the terminal, the PDCCH in a third reference CORESET and/or in a CORESET having a same QCL-typeD property as the third reference CORESET, wherein
the second reference CORESET is one CORESET among the *M* CORESETs, the third reference CORESET is one CORESET among the *M* CORESETs, and the second reference CORESET has a different QCL-typeD property from the third reference CORESET.

4. The method of claim 3, wherein in response to existence of a CORESET associated with a common search space (CSS) in a first CORESET in the overlapping PDCCH monitoring occasions on the active DL BWP, the first reference CORESET is:
a CORESET that belongs to a cell with a lowest index among a cell to which the CORESET associated with a CSS in the first CORESET belongs, and belongs to the first CORESET and is associated with a CSS with a lowest index, wherein
the first CORESET comprises: a CORESET associated with PDCCH repetitions among the *M* CORESETs.

5. The method of claim 3, wherein in response to absence of a CORESET associated with a CSS in a first CORESET in the overlapping PDCCH monitoring occasions on the active DL BWP, the first reference CORESET is:
a CORESET that belongs to a cell with a lowest index among a cell to which a CORESET associated with a USS in the first CORESET belongs, and belongs to the first CORESET and is associated with a user equipment (UE)-specific search space (USS) with a lowest index.

6. The method of claim 3, wherein in response to existence of a cell having a CORESET associated with a CSS in a first cell set in the overlapping PDCCH monitoring occasions on the active DL BWP, the second reference CORESET is:
a CORESET that belongs to a cell with a lowest index among the cell having the CORESET associated with a CSS in the first cell set, and is associated with a CSS with a lowest index, wherein
the first cell set comprises: cells corresponding to the *M* CORESETs.

7. The method of claim 3, wherein in response to absence of a cell having a CORESET associated with a CSS in a first cell set in the overlapping PDCCH monitoring occasions on the active DL BWP, the second reference CORESET is:
a CORESET that belongs to a cell with a lowest index among a cell having a CORESET associated with a USS in the first cell set, and is associated with a USS with a lowest index.

8. The method of claim 3, wherein in response to existence of a CORESET associated with a CSS in a second CORESET in the overlapping PDCCH monitoring occasions on the active DL BWP, the second reference CORESET is:
a CORESET that belongs to a cell with a lowest index among a cell to which the CORESET associated with a CSS in the second CORESET belongs, and belongs to the second CORESET and is associated with a CSS with a lowest index, wherein
the second CORESET comprises: a CORESET not associated with PDCCH repetitions among the M CORESETs.

9. The method of claim 3, wherein in response to absence of a CORESET associated with a CSS in a second CORESET in the overlapping PDCCH monitoring occasions on the active DL BWP, the second reference CORESET is:
a CORESET that belongs to a cell with a lowest index among a cell to which a CORESET associated with a USS in the second CORESET corresponds, and belongs to the second CORESET and is associated with a USS with a lowest index.

10. The method of any one of claims 6 to 9, wherein in response to absence of the CORESET having the same QCL-typeD property as the second reference CORESET in a CORESET associated with PDCCH repetitions among the M CORESETs, and in response to existence of the CORESET associated with a CSS in a third CORESET, the third reference CORESET is:
a CORESET that belongs to a cell with a lowest index among a cell to which the CORESET associated with a CSS in the third CORESET belongs, and belongs to the third CORESET and is associated with a CSS with a lowest index, wherein
the third CORESET comprises: the CORESET associated with PDCCH repetitions among the *M* CORESETs.

11. The method of any one of claims 6 to 9, wherein in response to absence of the CORESET having the same QCL-typeD property as the second reference CORESET in a CORESET associated with PDCCH repetitions among the *M* CORESETs, and in response to absence of the CORESET associated with a CSS in a third CORESET, the third reference CORESET is:
a CORESET that belongs to a cell with a lowest index among a cell to which a CORESET associated with a USS in the third CORESET belongs, and belongs to the third CORESET and is associated with a USS with a lowest index.

12. The method of any one of claims 6 to 9, wherein in response to existence of the CORESET having the same QCL-typeD property as the second reference CORESET in a CORESET associated with PDCCH repetitions among the *M* CORESETs, and in response to existence of the CORESET associated with a CSS in a fourth CORESET, the third reference CORESET is:
a CORESET that belongs to a cell with a lowest index among a cell to which the CORESET associated with a CSS in the fourth CORESET belongs, and belongs to the fourth CORESET and is associated with a CSS with a lowest index, wherein
the fourth CORESET comprises: a CORESET having a different QCL-typeD property from the second reference CORESET in a CORESET associated with the CORESET having the same QCL-typeD property as the second reference CORESET among the *M* CORESETs; or
the fourth CORESET comprises: a CORESET having a different QCL-typeD property from the second reference CORESET in the CORESET associated with PDCCH repetitions among the *M* CORESETs.

13. The method of any one of claims 6 to 9, wherein in response to existence of the CORESET having the same QCL-typeD property as the second reference CORESET in a CORESET associated with PDCCH repetitions among the *M* CORESETs, and in response to absence of the CORESET associated with a CSS in a fourth CORESET, the third reference CORESET is:
a CORESET that belongs to a cell with a lowest index among a cell to which a CORESET associated with a USS in the fourth CORESET belongs, and belongs to the fourth CORESET and is associated with a USS with a lowest index.

14. The method of claim 3, wherein in response to existence of a CORESET associated with a CSS in a fifth CORESET in the overlapping PDCCH monitoring occasions on the active DL BWP, the second reference CORESET is:
a CORESET that belongs to a cell with a lowest index among a cell to which the CORESET associated with a CSS in the fifth CORESET belongs, and belongs to the fifth CORESET and is associated with a CSS with a lowest index, wherein
the fifth CORESET comprises: a CORESET associated with PDCCH repetitions among the *M* CORESETs.

15. The method of claim 3, wherein in response to absence of a CORESET associated with a CSS in a fifth CORESET in the overlapping PDCCH monitoring occasions on the active DL BWP, the second reference CORESET is:
a CORESET that belongs to a cell with a lowest index among a cell to which a CORESET associated with a USS in the fifth CORESET belongs, and belongs to the fifth CORESET and is associated with a USS with a lowest index.

16. The method of claim 14 or 15, wherein in response to existence of the CORESET associated with a CSS in a sixth CORESET, the third reference CORESET is:
a CORESET that belongs to a cell with a lowest index among a cell to which the CORESET associated with a CSS in the sixth CORESET belongs, and belongs to the sixth CORESET and is associated with a CSS with a lowest index, wherein
the sixth CORESET comprises: a CORESET having a different QCL-typeD property from the second reference CORESET in a CORESET associated with the CORESET having the same QCL-typeD property as the second reference CORESET among the M CORESETs; or
the sixth CORESET comprises: a CORESET having a different QCL-typeD property from the second reference CORESET in the CORESET associated with PDCCH repetitions among the *M* CORESETs.

17. The method of claim 14 or 15, wherein in response to absence of the CORESET associated with a CSS in a sixth CORESET in the overlapping PDCCH monitoring occasions on the active DL BWP, the third reference CORESET is:
a CORESET that belongs to a cell with a lowest index among a cell to which a CORESET associated with a USS in the sixth CORESET belongs, and belongs to the sixth CORESET and is associated with a USS with a lowest index.

18. A method for channel monitoring, comprising:
configuring, by a network device, *M* control resource sets (CORESETs) in overlapping physical downlink control channel (PDCCH) monitoring occasions on an active downlink (DL) bandwidth part (BWP), repeated PDCCHs existing in PDCCH candidates associated with the *M* CORESETs, and *M* being an integer greater than or equal to 1.

19. The method of claim 18, wherein
all of the *M* CORESETs have a same quasi co-location type D (QCL-typeD) property; or
there is a CORESET having a different QCL-typeD property among the *M* CORESETs; or
there are CORESETs having a same QCL-typeD property among the *M* CORESETs.

20. The method of claim 18 or 19, wherein
the *M* CORESETs comprises a first reference CORESET and/or a CORESET having a same QCL-typeD property as the first reference CORESET, wherein the first reference CORESET is one CORESET among the *M* CORESETs; or
the *M* CORESETs comprises a second reference CORESET and/or a CORESET having a same QCL-typeD property as the second reference CORESET, and a third reference CORESET and/or a CORESET having a same QCL-typeD property as the third reference CORESET, wherein
the second reference CORESET is one CORESET among the M CORESETs, the third reference CORESET is one CORESET among the *M* CORESETs, and the second reference CORESET has a different QCL-typeD property from the third reference CORESET.

21. The method of claim 20, wherein in response to existence of a CORESET associated with a common search space (CSS) in a first CORESET in the overlapping PDCCH monitoring occasions on the active DL BWP, the first reference CORESET is:
a CORESET that belongs to a cell with a lowest index among a cell to which the CORESET associated with a CSS in the first CORESET belongs, and belongs to the first CORESET and is associated with a CSS with a lowest index, wherein
the first CORESET comprises: a CORESET associated with PDCCH repetitions among the *M* CORESETs.

22. The method of claim 20, wherein in response to absence of a CORESET associated with a CSS in a first CORESET in the overlapping PDCCH monitoring occasions on the active DL BWP, the first reference CORESET is:
a CORESET that belongs to a cell with a lowest index among a cell to which a CORESET associated with a USS in the first CORESET belongs, and belongs to the first CORESET and is associated with a user equipment (UE)-specific search space (USS) with a lowest index.

23. The method of claim 20, wherein in response to existence of a cell having a CORESET associated with a CSS in a first cell set in the overlapping PDCCH monitoring occasions on the active DL BWP, the second reference CORESET is:
a CORESET that belongs to a cell with a lowest index among the cell having the CORESET associated with a CSS in the first cell set, and is associated with a CSS with a lowest index, wherein
the first cell set comprises: cells corresponding to the *M* CORESETs

24. The method of claim 20, wherein in response to absence of a cell having a CORESET associated with a CSS in a first cell set in the overlapping PDCCH monitoring occasions on the active DL BWP, the second reference CORESET is:
a CORESET that belongs to a cell with a lowest index among a cell having a CORESET associated with a USS in the first cell set, and is associated with a USS with a lowest index.

25. The method of claim 20, wherein in response to existence of a CORESET associated with a CSS in a second CORESET in the overlapping PDCCH monitoring occasions on the active DL BWP, the second reference CORESET is:
a CORESET that belongs to a cell with a lowest index among a cell to which the CORESET associated with a CSS in the second CORESET belongs, and belongs to the second CORESET and is associated with a CSS with a lowest index, wherein
the second CORESET comprises: a CORESET not associated with PDCCH repetitions among the *M* CORESETs.

26. The method of claim 20, wherein in response to absence of a CORESET associated with a CSS in a second CORESET in the overlapping PDCCH monitoring occasions on the active DL BWP, the second reference CORESET is:
a CORESET that belongs to a cell with a lowest index among a cell to which a CORESET associated with a USS in the second CORESET belongs, and belongs to the second CORESET and is associated with a USS with a lowest index.

27. The method of any one of claims 23 to 26, wherein in response to absence of the CORESET having the same QCL-typeD property as the second reference CORESET in a CORESET associated with PDCCH repetitions among the M CORESETs, and in response to existence of the CORESET associated with a CSS in a third CORESET, the third reference CORESET is:
a CORESET that belongs to a cell with a lowest index among a cell to which the CORESET associated with a CSS in the third CORESET belongs, and belongs to the third CORESET and is associated with a CSS with a lowest index, wherein
the third CORESET comprises: the CORESET associated with PDCCH repetitions among the M CORESETs.

28. The method of any one of claims 23 to 26, wherein in response to absence of the CORESET having the same QCL-typeD property as the second reference CORESET in a CORESET associated with PDCCH repetitions among the *M* CORESETs, and in response to absence of the CORESET associated with a CSS in a third CORESET, the third reference CORESET is:
a CORESET that belongs to a cell with a lowest index among a cell to which a CORESET associated with a USS in the third CORESET belongs, and belongs to the third CORESET and is associated with a USS with a lowest index.

29. The method of any one of claims 23 to 26, wherein in response to existence of the CORESET having the same QCL-typeD property as the second reference CORESET in a CORESET associated with PDCCH repetitions among the M CORESETs, and in response to existence of the CORESET associated with a CSS in a fourth CORESET, the third reference CORESET is:
a CORESET that belongs to a cell with a lowest index among a cell to which the CORESET associated with a CSS in the fourth CORESET belongs, and belongs to the fourth CORESET and is associated with a CSS with a lowest index, wherein
the fourth CORESET comprises: a CORESET having a different QCL-typeD property from the second reference CORESET in a CORESET associated with the CORESET having the same QCL-typeD property as the second reference CORESET among the *M* CORESETs; or
the fourth CORESET comprises: a CORESET having a different QCL-typeD property from the second reference CORESET in the CORESET associated with PDCCH repetitions among the M CORESETs.

30. The method of any one of claims 23 to 26, wherein in response to existence of the CORESET having the same QCL-typeD property as the second reference CORESET in a CORESET associated with PDCCH repetitions among the *M* CORESETs, and in response to absence of the CORESET associated with a CSS in a fourth CORESET, the third reference CORESET is:
a CORESET that belongs to a cell with a lowest index among a cell to which a CORESET associated with a USS in the fourth CORESET belongs, and belongs to the fourth CORESET and is associated with a USS with a lowest index.

31. The method of claim 20, wherein in response to existence of a CORESET associated with a CSS in a fifth CORESET in the overlapping PDCCH monitoring occasions on the active DL BWP, the second reference CORESET is:
a CORESET that belongs to a cell with a lowest index among a cell to which the CORESET associated with a CSS in the fifth CORESET belongs, and belongs to the fifth CORESET and is associated with a CSS with a lowest index, wherein
the fifth CORESET comprises: a CORESET associated with PDCCH repetitions among the *M* CORESETs.

32. The method of claim 20, wherein in response to absence of a CORESET associated with a CSS in a fifth CORESET in the overlapping PDCCH monitoring occasions on the active DL BWP, the second reference CORESET is:
a CORESET that belongs to a cell with a lowest index among a cell to which a CORESET associated with a USS in the fifth CORESET belongs, and belongs to the fifth CORESET and is associated with a USS with a lowest index.

33. The method of claim 31 or 32, wherein in response to existence of the CORESET associated with a CSS in a sixth CORESET in the overlapping PDCCH monitoring occasions on the active DL BWP, the third reference CORESET is:
a CORESET that belongs to a cell with a lowest index among a cell to which the CORESET associated with a CSS in the sixth CORESET belongs, and belongs to the sixth CORESET and is associated with a CSS with a lowest index, wherein
the sixth CORESET comprises: a CORESET having a different QCL-typeD property from the second reference CORESET in a CORESET associated with the CORESET having the same QCL-typeD property as the second reference CORESET among the *M* CORESETs; or
the sixth CORESET comprises: a CORESET having a different QCL-typeD property from the second reference CORESET in the CORESET associated with PDCCH repetitions among the *M* CORESETs.

34. The method of claim 31 or 32, wherein in response to absence of the CORESET associated with a CSS in a sixth CORESET in the overlapping PDCCH monitoring occasions on the active DL BWP, the third reference CORESET is:
a CORESET that belongs to a cell with a lowest index among a cell to which a CORESET associated with a USS in the sixth CORESET belongs, and belongs to the sixth CORESET and is associated with a USS with a lowest index.

35. An apparatus for channel monitoring, comprising:
a processing unit configured to monitor a physical downlink control channel (PDCCH) in *M* control resource sets (CORESETs), in response to existence of the M CORESETs in overlapping PDCCH monitoring occasions on an active downlink (DL) bandwidth part (BWP) and existence of repeated PDCCHs in PDCCH candidates associated with the *M* CORESETs, *M* being an integer greater than or equal to 1.

36. An apparatus for channel monitoring, comprising:
a processing unit configured to configure *M* control resource sets (CORESETs) in overlapping physical downlink control channel (PDCCH) monitoring occasions on an active downlink (DL) bandwidth part (BWP), repeated PDCCHs existing in PDCCH candidates associated with the *M* CORESETs, and *M* being an integer greater than or equal to 1.

37. A terminal, comprising a processor, a memory, a communication interface, and one or more programs, wherein the one or more programs are stored in the memory and configured to be executed by the processor, and the one or more programs comprises instructions for executing operations in the method of any one of claims 1 to 17.

38. A network device, comprising a processor, a memory, a communication interface, and one or more programs, wherein the one or more programs are stored in the memory and configured to be executed by the processor, and the one or more programs comprises instructions for executing operations in the method of any one of claims 18 to 34.

39. A computer-readable storage medium configured to store a computer program for electronic data interchange (EDI), wherein the computer program is operable with a computer to perform the method of any one of claims 1 to 34.

40. A chip, comprising a processor, wherein the processor is configured to execute operations in the method of any one of claims 1 to 17 or claims 18 to 34.
